# EUROPEAN PATENT APPLICATION

(11) **EP 2 123 161 A2**
(43) Date of publication of application: **25.11.2009**
(21) Application number: 09382048.8
(22) Date of filing: 08.04.2009
(51) Int. Cl.: A01N 59/20, A01P 3/00, A01P 21/00

(54) **Product for agricultural use based on organic copper complexes**

(30) Priority: 09.04.2008 ES 200801004
(71) Applicant: Servalesa, S.L., 46520 Puerto Sagunto (Valencia) (ES)
(72) Inventor: Juanes Peris, Jose, Helenio, 46520 Puerto Sagunto (Valencia) (ES); Juanes Peris, Luis, 46520 Puerto Sagunto (Valencia) (ES)
(74) Representative: Carpintero Lopez, Francisco

(57) **Abstract**

The invention relates to a composition for agricultural use comprising an active ingredient consisting of a mixture of copper monogluconate and copper monogalacturonate. The invention likewise defines a process for preparing said composition and a method for applying same. The composition of the invention allows preventing or reducing in plants of many different species the attacks of various fungal or bacterial diseases, as well as mitigating the effects of various biological or environmental stress factors, acting effectively in a preventive and curative manner with lower copper concentrations and, therefore, with a lower environmental impact. It likewise activates and strengthens the defense mechanisms of plants, in addition to increasing the vigor and the development thereof, thus providing larger crops with a higher quality.

## Description

### Field of the Invention

The invention relates to the field of products for agricultural use. The invention particularly relates to a composition based on natural organic copper complexes intended to prevent or reduce the damage of diseases in cultivable plants, as well induce or stimulate the natural defenses thereof and increase their vigor and healthiness.

### Background of the Invention

As is well known in the state of the art, there are many cryptogamic diseases caused in plants by endogenous and/or exogenous vascular bacteria or fungi, such as, for example, anthracnose, leaf spot, monilia, venturia, alternaria, sooty mold, gummosis, mildew, bacteriosis and others.

Current techniques for combating the aforementioned diseases are mainly based on the use of inorganic copper products, contemplating a series of formulations with greater or lesser efficacy. Bordeaux mixture (cupric sulfate neutralized with hydrated lime), copper oxychloride, copper hydroxide and cuprous oxide, which are effective in the treatment of diseases in crops of various plants such as trees, fruit trees, vines, olive trees, etc., can be emphasized among these inorganic copper compounds. Thus, for example, copper oxychloride has been used in fungicidal treatments to control cork oak canker (Navarro et al., Boletín de Sanidad Vegetal: Plagas, 30: 605-613, 2004). Likewise, Bordeaux mixture, copper oxychloride and cuprous oxide are normally used in the treatment of olive leaf spot, among other diseases of this crop (Barranco et al. 1998, Cultivo del olivo, Ed. Mundi-Prensa, Madrid).

However, the use of these products has a high degree of environmental impact, mainly due to the high content of the heavy metal incorporated therein, as well as the mechanism of action thereof, acting by contact by means of the massive application thereof on the crop, generating a toxic action of copper (II) on the pathogen. These massive applications of product with high copper content generate serious problems of waste in the crops and derived products, as well as of contamination in the areas of application (soil, aquifers, etc.). Furthermore, this copper waste in the parts of the crops which can be marketed cannot be easily eliminated and its possible negative effects on consumers are evident.

Therefore, there is still a need in the state of the art for alternative products for agricultural use for the treatment and prevention of diseases in crops having a good efficacy but fewer adverse effects on the environment.

For the purpose of reducing the environmental problems, an organic copper product has recently been proposed for combating the pathogens of plants based on a combination of monomeric and polymeric copper complexes such as pectinates or polygalacturonates (ES 2231015). Said product, however, has the drawbacks of a low physicochemical stability due to the high molecular weight of its components which causes the formation of solids in suspension inside the matrix of the solution and, therefore, a lower agronomic effectiveness thereof. Likewise, on the market there are products containing synthetic copper heptagluconate (Hidromix, Alibio Biomix, Dabquel mix, etc.), therefore, in their synthesis process they incorporate inert matter which later pass to the final formulation thereof.

The present inventors have discovered that the use of a composition exclusively containing the monomeric copper complexes monogluconate and monogalacturonate as the active ingredient, allows not only a higher efficacy against pathogens and a higher innocuousness but also an important action as inducers and stimulators of the defenses of plants and as enhancers of the vigor and healthiness thereof, which leads to a higher efficacy in controlling the action of pathogens in cultivable plants.

On one hand, its copper concentration is much lower than that of traditional cupric fertilizers or fungicides based on copper salts, therefore contamination problems are reduced. On the other hand, since it does not contain copper in ionic form, the latter cannot crystallize as an inorganic salt and, therefore, it can be more easily absorbed through the roots, when it is applied by fertirrigation, or by means of leaf spraying, when it is applied by spraying on the leaves. Its mechanism of action in the plant is therefore systemic. A massive application of the composition is therefore not necessary since the latter does not act by contact but rather, as a result of its systemics and of its capacity to induce defensive responses of plants, it is applied at much lower doses and concentrations, with an equal or even higher efficacy, as has been demonstrated by numerous efficacy assays conducted. The presence in the composition of low molecular weight monomeric complexes makes it be even more systemic, more easily transportable by the plant sap and, therefore, have a more pronounced effect of inducing the natural defenses of the plant. Finally, since it is a natural composition, it does not contain synthetic products; therefore it is innocuous for plants, not having phytotoxicity at the recommended application concentrations.

Various chemical inducers which are used in treatments for inducing defense mechanisms in plants are known in the state of the art. These inducer compounds, also known as elicitors, can be of the abiotic type such as 2,6-dichloroisonicotinic acid (isonicotinic acid, INA), 3-allyloxy-1,2-benzisothiazole-1,1-dioxide (Probenazole), S-methylbenzo(1,2,3)thiadiazole-7-carbothiate (acibenzolar-S-methyl, ASM, BTH, BION®, etc.) and salicylic acid (SA) (De Meyer et al., 1999, "Nanogram amounts of salicylic acid produced by the rhizobacterium Pseudomonas aeruginosa 7NSK2 activate the systemic acquired resistance pathway in bean", MPMI, 12:450-458; Gorlach et al., 1996, "Benzothiadiazone, a novel class of inducers of systemic acquired resistance, activates gene expression and disease resistance in wheat", Plant Cell, 8:629-643; Kessmann et al., 1994, "Induction of systemic acquired disease resistance in plants by chemicals", Annu Rev Phystopathol, 32:439-459; Pieterse et al., 1998, "A novel signaling pathway controlling induced systemic resistance in Arabidopsis", Plant Cell, 10:1571-1580; and Sakamot et al., 1999, "Chemical induction of disease resistance in rice correlated with the expression of a gene encoding a nucleotide binding site and leucine-rich repeats", Plant Mol Biol, 40:847-855). These chemical inducers, however, could lead to environmental type problems. Biotic type elicitors such as the harpin protein contained in the registered product Messenger have recently been described (United States Environmental Protection Agency (EPA), 2000, "Messenger: A Promising Reduced Risk Biopesticide, PESP (Pesticide Environmental Stewardship Program) Update. Vol. 3. Number 1).

On the other hand, various plant strengthening compounds for increasing the vigor and the healthiness of crops are known in the state of the art, such that such crops have a faster and more balanced growth, are better developed and produced and, furthermore, enhance their defenses for combating pests and diseases. These plant strengtheners, or biostimulants, are usually natural such as humus, amino acids, micronutrients, seaweed extracts, etc. Thus, for example, seaweed extracts have been used to promote the growth of mandarin and orange trees (Fornes et al., 2002, "Effect of a seaweed extract on the productivity of 'de Nules' clementine mandarin and Navelina orange", Botanica Marina 45:486-489) or the growth of peppers (Arthur et al., 2003, "Effect of a seaweed concentrate on the growth and yield of three varieties of Capsicum annum, South African Journal of Botany 69, 207-211).

Thus, organic copper complexes have not been used up until now to induce and stimulate defense mechanisms in plants or to increase the vigor or the healthiness thereof.

The composition of the present invention therefore allows preventing or reducing in plants of many different species the attacks of various fungal or bacterial diseases, as well as mitigating the effects of various biological or environmental stress factors, acting effectively in a preventive and curative manner, with lower copper concentrations and, therefore, with a lower environmental impact. It likewise activates and strengthens the defense mechanisms of plants, in addition to increasing the vigor and the development thereof, thus providing larger crops with a higher quality.

### Object of the Invention

The object of the present invention is therefore to provide a composition for agricultural use comprising an active ingredient consisting of a mixture of copper monogluconate and copper monogalacturonate.

Another object of the present invention is to provide a process for preparing said composition.

Likewise, another object of the present invention is to provide a method for preventing or reducing the damage of diseases in cultivable plants, for inducing and stimulating the self-defenses thereof and for increasing their vigor and healthiness comprising the application of said composition to said cultivable plants.

### Description of the Drawings

Figure 1 shows the resistance-inducing activity of the composition of the invention in a wild *Arabidopsis thaliana* plant (Col-0) and the mutant *npr1-1* defective in SAR (Systemic Acquired Resistance) activation, against the fungus *Hyaloperonospora parasitica NOCO2.*
Figure 2 shows the resistance-inducing activity of the composition of the invention in a wild *Arabidopsis thaliana* plant (Col-0) and the mutant *npr1-1* defective in SAR activation, against the fungus *Hyaloperonospora parasitica NOCO2.*
Figure 3 shows the resistance-inducing activity of the composition of the invention in a wild *Arabidopsis thaliana* plant (Col-0), the mutant *npr1-1* defective in SAR activation and the mutant *cpr1-5* having SAR constitutively activated, against the fungus *Hyaloperonospora parasitica NOCO2.*
Figure 4 shows the efficacy of the composition of the invention, applied by means of leaf spraying, to mitigate the progression of the infection of the fungus *Phytophthora infestans* in greenhouse tomatoes.
Figure 5 shows the efficacy of the composition of the invention, applied by means of leaf spraying, as a vigor response inducer in greenhouse tomatoes.
Figure 6 shows the efficacy of the composition of the invention, applied through irrigation, for mitigating the progression of the infection of the fungus *Phytophthora infestans* in greenhouse tomatoes.
Figure 7 shows the efficacy of the composition of the invention, applied through irrigation, as a vigor response inducer in greenhouse tomatoes.
Figure 8 shows the efficacy of the composition of the invention, applied by means of leaf spraying, for mitigating the progression of the infection of the fungus *Pseudoperonospora cubensis* in greenhouse cucumbers.
Figure 9 shows the efficacy of the composition of the invention, applied by means of leaf spraying, as a vigor response inducer in greenhouse cucumbers.
Figure 10 shows the efficacy of the composition of the invention, applied through irrigation, for mitigating the progression of the infection of the fungus *Pseudoperonospora cubensis* in greenhouse cucumbers.
Figure 11 shows the efficacy of the composition of the invention, applied through irrigation, as a vigor response inducer in greenhouse cucumbers.
Figure 12 shows the efficacy of the composition of the invention, applied by means of leaf spraying, for mitigating the progression of the infection of the fungus *Bremia lactucae* in lettuce cultivated outdoors.
Figure 13 shows the efficacy of the composition of the invention, applied by means of leaf spraying, as a vigor response inducer in lettuce cultivated outdoors.
Figure 14 shows the efficacy of the composition of the invention, applied through irrigation, for mitigating the progression of the infection of the fungus *Bremia lactucae* in lettuce cultivated outdoors.
Figure 15 shows the efficacy of the composition of the invention, applied through irrigation, as a vigor response inducer in lettuce cultivated outdoors.
Figure 16 shows the efficacy of the composition of the invention, applied by means of leaf spraying, for mitigating the progression of the infection of the fungus *Phytophthora cactorum* in strawberries cultivated under a plastic tunnel.
Figure 17 shows the efficacy of the composition of the invention, applied by means of leaf spraying, as a vigor response inducer in strawberries cultivated under a plastic tunnel.
Figure 18 shows the efficacy of the composition of the invention, applied through irrigation, for mitigating the progression of the infection of the fungus *Phytophthora cactorum* in strawberries cultivated under a plastic tunnel.
Figure 19 shows the efficacy of the composition of the invention, applied through irrigation, as a vigor response inducer in strawberries cultivated under a plastic tunnel.
Figure 20 shows the efficacy of the composition of the invention, applied by means of leaf spraying, for mitigating the progression of the infection of the fungus *Venturia inaequalis* in apple trees.
Figure 21 shows the efficacy of the composition of the invention, applied by means of leaf spraying, for mitigating the progression of the infection of the fungus *Venturia inaequalis* in apple trees.
Figure 22 shows the efficacy of the composition of the invention, applied by means of leaf spraying, as a vigor response inducer in apple trees.
Figure 23 shows the efficacy of the composition of the invention, applied by means of leaf spraying, for mitigating the progression of the infection of the fungus *Venturia pyrina* in pear trees.
Figure 24 shows the efficacy of the composition of the invention, applied by means of leaf spraying, for mitigating the progression of the infection of the fungus *Venturia pyrina* in pear trees.
Figure 25 shows the efficacy of the composition of the invention, applied by means of leaf spraying, as a vigor response inducer in pear trees.
Figure 26 shows the efficacy of the composition of the invention, applied by means of leaf spraying, for mitigating the progression of the infection of the fungus *Monilinia spp* in peach trees.
Figure 27 shows the efficacy of the composition of the invention, applied by means of leaf spraying, as a vigor response inducer in peach trees.
Figure 28 shows the efficacy of the composition of the invention, applied by means of leaf spraying, for mitigating the progression of the infection of the fungus *Plasmopara viticola* in vines.
Figure 29 shows the efficacy of the composition of the invention, applied by means of leaf spraying 1 week later, for mitigating the progression of the infection of the fungus *Plasmopara viticola* in vines.
Figure 30 shows the efficacy of the composition of the invention, applied by means of leaf spraying, as a vigor response inducer in vines.
Figure 31 shows the efficacy of the composition of the invention, applied by means of leaf spraying, for mitigating the progression of the infection of the fungus *Spilocaea oleagina* in picual variety olive trees.
Figure 32 shows the efficacy of the composition of the invention, applied by means of leaf spraying, for mitigating the progression of the infection of the fungus *Spilocaea oleagina* in picual variety olive trees.
Figure 33 shows the efficacy of the composition of the invention, applied by means of leaf spraying, as a vigor response inducer in picual variety olive trees.
Figure 34 shows the efficacy of the composition of the invention, applied by means of leaf spraying, for mitigating the progression of the infection of the fungus *Spilocaea oleagina* in manzanillo variety olive trees.
Figure 35 shows the efficacy of the composition of the invention, applied by means of leaf spraying, for mitigating the progression of the infection of the fungus *Spilocaea oleagina* in manzanillo variety olive trees.
Figure 36 shows the efficacy of the composition of the invention, applied by means of leaf spraying, as a vigor response inducer in manzanillo variety olive trees.

### Detailed Description of the Invention

The present invention provides a composition for agricultural use, hereinafter "composition of the invention", comprising an active ingredient consisting of a mixture of copper monogluconate and copper monogalacturonate.

In the context of the invention the term "mixture of copper monogluconate and copper monogalacturonate" relates to a mixture exclusively formed by copper (II) mono-gluconate and -galacturonate, without the presence of other complexes involving non-monomeric type ligands.

The purpose of these organic monomeric copper complexes is to exert an action inducing the plant defenses of crops through their systemic capacities due to their low molecular weight, for the purpose of mitigating the effects of cryptogamic diseases caused by endogenous and/or exogenous vascular bacteria or fungi.

These two organic molecular complexes, copper monogluconate and monogalacturonate, cause the absence of Cu (II) cations in the solution, such that Cu (II) cannot crystallize as a simple copper salt, being able to be absorbed by fertirrigation and through the semipermeable leaf membrane, being translocated by the sap.

In a particular embodiment, the composition of the invention comprises 15-30% by weight of active ingredient with respect to the total composition weight. In a preferred embodiment, the composition of the invention comprises 23% by weight of active ingredient with respect to the total composition weight.

Thus, the copper content of the composition of the invention is of the order of 5.5% by weight, whereas in traditional inorganic copper products (oxychlorides, hydroxides, sulfates, etc.) the concentrations of said metal range between 25% and 70% by weight. The effective action of the composition of the invention is therefore achieved with a much lower environmental impact and risk for the farmer.

The composition of the invention, in addition to the previously described active ingredient, can contain other components or additives facilitating its formulation for its subsequent application. Thus, in a particular embodiment, the composition of the invention comprises one or more additives selected from among a surfactant and a pH regulator.

Any compound with surface-active properties of the state of the art, such as for example, an ethoxylated fatty alcohol such as ethoxylated tridecyl alcohol, ethoxylated nonylphenol, ethoxylated octylphenol, etc. (Polyoxol 030085/85 from Cognis, Berol 907 from Akzo Nobel or Triton from Dow, for example), a sorbitan derivative (Tween 20 or Tween 80, for example), or another suitable one which will be selected by the skilled person can be used as a surfactant or wetting agent. Likewise, any suitable acidifying compound of the state of the art such as an inorganic or organic acid (citric acid, lactic acid or acetic acid, for example) can be used as a pH regulator. In a preferred embodiment, the surfactant is a C₈-C₁₈ ethoxylated alcohol and the pH regulator is a low molecular weight carboxylic acid.

In another aspect of the invention, a process for preparing the previously described composition of the invention, hereinafter "process of the invention", comprising the steps of:
(a) dissolving in water 30-50% by weight, with respect to the total final composition weight, of pectin at a temperature of 55-65ºC and adding 4-6% by weight, with respect to the total final composition weight, of at least one pectinase enzyme;
(b) passing a carbon dioxide stream through the solution obtained in step (a) and adding 0.3-0.6% by weight, with respect to the total final composition weight, of at least one reductase enzyme; and
(c) adding a soluble copper salt to the solution obtained in step (b).

To prepare the pectin solution of step (a), a food grade pectin from fruit (apple, peach and citrus fruits, mainly) is selected, which pectin is preferably low-methoxylated and non-amidated, both of these pectin characteristics leading to obtaining a higher yield of galacturonic acid in the enzymatic hydrolysis reaction of step (a).

Said solution is prepared at a suitable temperature of the order of 55-65ºC and with stirring in a closed stirring reactor or another suitable device of the state of the art. Next, 4-6% by weight of one or more hydrolytic food grade pectinase enzymes such as, for example, polygalacturonase and pectin lyase is added, adding approximately 2% by weight of citric acid to reduce the pH such that the viscosity of the pectin solution is not too high for the reaction with the enzyme. It is then maintained stirring for the necessary time so that the reaction occurs to all its extent which will be of the order of 24 hours. The described conditions of high temperature, low pH, high hydrolytic enzyme concentration and prolonged stirring time lead to a total hydrolysis of the pectin polymers, yielding galacturonic acid monomers with a low presence of polygalacturonates and pectinates.

In a particular embodiment of the process of the invention, in step (a) 40% by weight, with respect to the total final composition weight, of pectin is dissolved at a temperature of 60ºC and 5% by weight, with respect to the total final composition weight, of at least one pectinase enzyme is added.

In step (b), oxygen is eliminated from the air present in the reactor by means of injecting carbon dioxide in order to have a non-oxidizing medium. 0.3-0.6% by weight of at least one reductase enzyme, such as, for example, D-galacturonate reductase, is then added to obtain gluconic acid by reduction of galacturonic acid, maintaining the stirring for about 3 hours until the end of the reaction. The small amount of reductase used as well as the relatively short stirring time lead to obtaining a suitable equilibrium between the mono-gluconate and -galacturonate forms.

In a particular embodiment of the process of the invention, in step (b) 0.5% by weight, with respect to the total final composition weight, of at least one reductase enzyme is added.

In step (c), 25% commercial copper sulfate is added to the reactor and the stirring is continued for 3 hours until its complete dissolution, after which a homogeneous mixture of stable copper mono-gluconate and -galacturonate complexes plus a small amount of unstable complexes tending to precipitate, which have a larger molecular size due to the partial hydrolysis of the food grade pectin used, will have been obtained.

The composition thus obtained is later subjected to a centrifugation to eliminate the precipitated fraction of copper complexes based on polymeric ligands, which do not remain in aqueous solution due to their high molecular weight. After the centrifugation, a small solid phase, which is discarded, and an intense blue liquid phase are separated. This liquid phase is allowed to settle for at least four-five days in maturation tanks so that small particles of precipitated complexes are deposited at the bottom and a clear intense blue solution without solids in suspension, with a final pH between 3 and 4, can finally be obtained, to which the aforementioned different additives will be added to prepare the composition of the invention.

Finally, the composition of the invention thus prepared is packaged in suitable containers to be distributed and applied in the agricultural sector, such as, for example in polyethylene containers.

The composition of the invention thus obtained will be applied by fertirrigation or by leaf spraying at the suitable doses according to crops, growing seasons and other unspecified circumstances, thus achieving a systemic action of copper.

As has been indicated, the composition of the invention can be used by means of application on the leaves of the plants or through irrigation, since its effect is also shown by means of chemically induced resistance (CIR) mechanisms and systemic and natural defense processes of the plant. This fact makes it unnecessary to thoroughly cover the tree in a leaf application, thus simplifying the work of the farmer. Indeed, given that its mechanism of action moves through the plant and that the actual product is systemic, a massive application as with traditional copper products is not necessary to obtain a suitable result. Furthermore, the possibility of being used in irrigation, in addition to the obvious ease of application, introduces a greater safety variable, since the impact on useful fauna is nil. As has been shown by numerous assays conducted, adverse effects on useful arthropods have not been observed. The risk on non-target organisms is considered to be insignificant. In the same way, due to its specific mode of action, the potential for creating resistances is extremely low. On the contrary, the composition of the invention could form part of a plan of treatments to limit the onset of resistances to specific fungicides.

In the same sense, the composition of the invention does not have risks of waste accumulation in the crop or in the products derived therefrom (oils, wines ...). It is therefore in accordance with integrated production objectives and can be used in ecological agriculture, as certified by various authorized entities (CERTICAE, CERTIPLANET and SOHISCERT). Therefore, the composition of the invention is highly environmentally friendly in addition to being effective and safe.

The composition of the invention does not show phytotoxicity risks and is not toxic for the people applying it. Due to the characteristics of the formulation, the composition of the invention has a very favorable toxicological profile, which is a clear advantage with respect to most formulations used as fungicides. Various types of acute toxicity studies as well as allergenic potential studies have been conducted by the authorized assay laboratory RCC CIDA SA, which has concluded that the composition of the invention is not considered classifiable as a hazardous product and it is not necessary to assign it any phrase referring to same.

Thus, in another aspect of the invention, a method for preventing or reducing the damage of diseases in cultivable plants is provided, comprising applying the composition of the invention thereto by means of fertirrigation or leaf spraying.

In leaf spraying, the necessary dose of the composition of the invention is dissolved in the sufficient amount of water to facilitate a uniform distribution of the product on the crop. A correct calibration of the application equipment must be ensured.

The usual rules in fertirrigation treatments will be followed in the application through the irrigation system.

The composition of the invention allows mitigating the damage which can be caused by diseases occurring due to fungi such as: *Alternaria brassicae* (cruciferae "blight"), *Alternaria plurisepta* (cucurbitaceae "blight"), *Alternaria solani* (potato and tomato "blight") and other alternariosis, *Ascochyta fabae* (broad bean "anthracnose"), *Ascochyta hortorum* (eggplant "pox" or "anthracnose"), *Ascochyta pisi* (pea "anthracnose"), *Cercospora beticola* (beet "leaf spot"), *Colletotrichum coccodes* (eggplant, pepper and tomato "anthracnose"), *Coniothyrium sp.* ("black rot"), *Diaporthe citri* (citrus fruit "phomopsis"), *Diplocarpon rosae* (rose "anthracnose" or "black spot"), *Glomerella lagenarium* (melon and other cucurbitaceae "anthracnose"), *Glomerella lindemuthiana* (bean, broad bean "anthracnose", etc.), *Microdochium panattonianum* (lettuce "anthracnose"), *Monilia fructigena* and *Monilia laxa* ("mummification" of fruit with pits and seeds), *Mycosphaerella fragariae* (strawberry "anthracnose" or "black spot"), *Mycosphaerella rabiei* (chickpea "blight"), *Pseudoperonospora humuli* (hop "mildew"), *Phragmidium mucronatum* (rose "rust"), *Phytophthora capsici* (eggplant and pepper "mildew"), *Phytophthora citrophthora* and *Phytophthora hibernalis* (citrus fruit "brown rot"), *Phytophthora infestans* (potato and tomato "mildew"), *Plasmopara viticola* (vine "mildew"), *Pseudoperonospora humuli* (hop "mildew"), *Pseudoperonospora cubensis* (cucumber "mildew"), *Bremia lactucae* (lettuce "mildew"), *Phytophthora cactorum* (strawberry "mildew"), *Spilocaea oleagina* ("leaf spot"), *Stigmina carpophila* ("shot-hole"), *Taphrina deformans* ("leaf curl"), *Uromyces* spp. (leguminous plant "rust"), *Venturia cerasi* (cherry "scab"), *Venturia inaequalis* (apple "scab"), *Venturia pirina* (pear "scab") and many other diseases caused by endoparasitic fungi in ornamental bushes, citrus fruits, strawberries, pitted fruit trees, seeded fruit trees, subtropical fruit trees, horticultural fruit trees, industrial fruit trees, olive trees, ornamental plants, herbaceous plants, cereals, rose bushes and vines.

In the field of the diseases caused by bacteria, the composition of the invention allows mitigating the damage which can be caused by: *Agrobacterium tumefaciens, Clavibacter michiganensis, Erwinia carotovora, Pseudomonas syringae, Xanthomonas campestres, Xylophilus (Xanthomonas) ampelina* and others, in horticultural plants, fruit trees, vine arbors and vines.

The use of the composition of the invention further allows neutralizing copper deficiencies in the plant which are shown with necrosis in the leaves, which take on a wilted and dark appearance or which occasionally appear highly curled and with a white tip, and with a decrease in the quality of the fruit and grains, an abnormal development of the plants generally being observed.

Similarly, in another aspect of the invention, a method for inducing and stimulating the self-defenses of cultivable plants is provided, characterized in that it comprises applying the composition of the invention thereto by means of fertirrigation or leaf spraying.

The composition of the invention favors the catalysis of the biosynthesis of polyphenols and phytoalexins, substances produced as a natural defense mechanism of plants which are toxic for fungi and bacteria; therefore they limit the spread of the pathogen. The composition of the invention therefore acts as a fungistatic and bacteriostatic agent while at the same time it generates self-defenses against fungal or bacterial diseases.

Similarly, in another aspect of the invention, a method for increasing the vigor and the healthiness of cultivable plants is provided, characterized in that it comprises applying the composition of the invention thereto by means of fertirrigation or leaf spraying.

The composition of the invention favors the photosynthesis and development of plant tissues, whereby the plants of the crops treated therewith have a considerable increase in vigor, both in relation to those that are not treated and in relation to those treated with conventional products. The composition of the invention can therefore be considered as a strengthening product, which contributes to improving the crop vegetation, inducing defense responses against abiotic stress which translate into vigorous plants with an excellent shine and color. More vigorous plants are furthermore less susceptible to suffering damage by pathogen attacks.

The application dose, as well as the time intervals between applications, will be determined by the type of plant to be treated, the fungus or the bacteria in question and the type of application (leaf spraying or fertirrigation).

Finally, the composition of the invention is very stable and homogeneous therefore it does not need constant stirring in the application vat and does not have any risk of nozzle or dropper blockage either.

The following examples illustrate the invention and must not be considered as limiting the scope thereof

### Example I

### Preparation of a composition for agricultural use containing 23% by weight of copper monogluconate and monogalacturonate

Water at a temperature of 60 degrees centigrade, 40% low-methoxylated and non-amidated peach food grade pectin and 5% commercial polygalacturonase and pectin lyase are introduced in a closed stirring reactor, adding 2% citric acid. Then, the stirring is maintained for 24 hours until the reaction ends.

Next, carbon dioxide is injected to eliminate oxygen from the reactor and 0.5% commercial D-galacturonate reductase is added to obtain gluconic acid by reduction of galacturonic acid, maintaining the stirring for 3 hours until the end of the reaction.

Finally, 25% commercial copper sulfate is added to the reactor and the stirring is continued for 3 hours until complete dissolution. Said solution is then subjected to a centrifugation to eliminate the precipitated fraction of copper complexes based on polymeric ligands. After the centrifugation, a small solid phase, which is discarded, and an intense blue liquid phase are separated. This liquid phase is allowed to settle for five days in maturation tanks so that small particles of precipitated complexes are deposited at the bottom and a composition in the form of a clear intense blue solution without solids in suspension, with a final pH value between 3 and 4 and with 23% by weight of copper monogluconate and monogalacturonate can finally be obtained.

### Example 1

### Capacity of the composition obtained in Example I to induce resistance against the biotrophic oomycete Hyaloperonospora parasitica NOCO2 in the dicotyledonous plant Arabidopsis thaliana

A series of independent experiments were carried out in the Centro de Biotecnologia y Genómica de Plantas (Plant Biotechnology and Genomics Center) of the Universidad Politécnica de Madrid.

To analyze the capacity of the composition obtained in Example I to induce resistance in the model plant *Arabidopsis thaliana,* the experiments were conducted with wild plants (Col-0) and the mutants *npr1-1* and *cpr1-5* (genetic background Col-0) having, respectively, the SAR or Systemic Acquired Resistance constitutively inactivated and activated (Glazebrook et al., 2001, Genes controlling expression of defense response in Arabidopsis: 2001 status. Curr. Opin. Plant Biol. 4, 301-308).

Seedlings of the three genotypes of 9 or 14 days of age, which seedlings had been germinated and grown in soil according to described protocols (Berrocal-Lobo et al., 2002, Constitutive expression of Ethylene-Response-Factor 1 in Arabidopsis confers enhanced resistance to several necrotrophic fungi. Plant Journal 29, 23-32), were treated with water (control treatment) or with different concentrations of the composition obtained in Example I (25 ml/l, 2.5 ml/l or 0.25 ml/l), and two days later they were inoculated with the biotrophic oomycete fungus *Hyaloperonospora parasitica NOCO2,* which is virulent in Col-0 plants, the genetic background of the wild plants and of the mutants analyzed. In a first experiment, it was determined which concentrations of the composition of 1 ml/l or less had no phytotoxic effects on the seedlings.

After this preliminary analysis of the phytotoxicity of the composition in *Arabidopsis thaliana,* three experiments (Experiments 1-3) were conducted, in which wild seedlings (Col-0), and mutants *npr1-1* or *cpr1-5,* of 9 or 14 days of age were treated with water (control treatment, 0 ml/l) or with different concentrations of the composition obtained in Example I (2.5 ml/l or 0.25 ml/l, in Experiments 1 and 2; 1 ml/l and 0.25 ml/l in Experiment 3). At least 40 seedlings of each genotype were used for each of the treatments assayed. Two days later, the treated plants were inoculated with the biotrophic oomycete *Hyaloperonospora parasitica NOCO2,* which is virulent in Col-0 plants, the genetic background of the wild plants and mutants analyzed, and the progress of the disease was microscopically monitored. The level of infection of the inoculated seedlings was determined between 10-14 days after the inoculation by means of the quantification of the number of spores produced by the oomycete per milligram of fresh weight of the plants (Llorente et al., 2005, Erecta receptor-like kinase and heterotrimeric G protein from Arabidopsis are required for resistance to the necrotrophic fungus Plectosphaerella cucumerina. Plant Journal 43, 165-180).

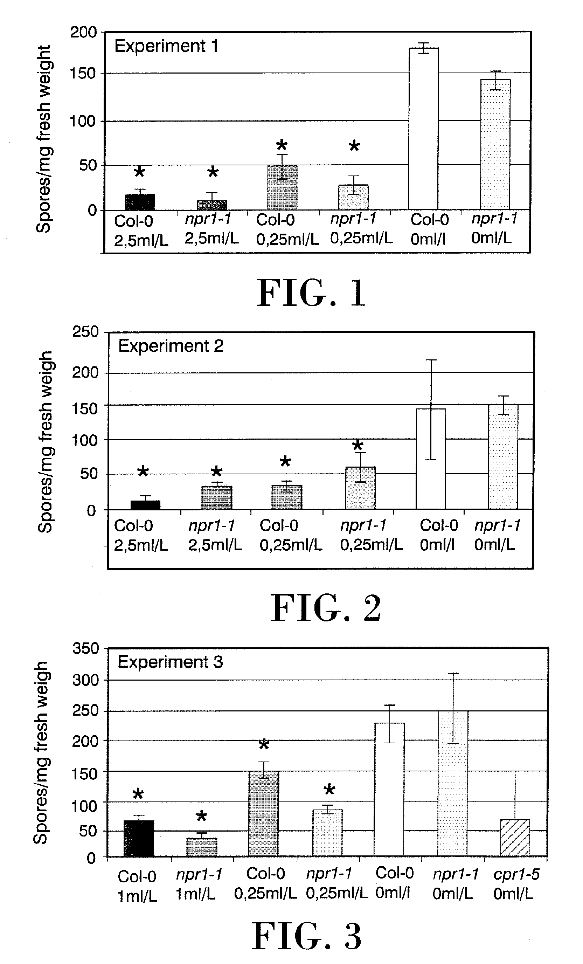

The results are shown in Figures 1-3 in which the asterisks indicate significantly different values (p<0.01, t-test) from the respective untreated genotypes (0 ml/l). The data represent the mean of at least 40 plants (± standard error).

As is observed in said Figures 1-3, the number of spores of *Hyaloperonospora parasitica* per milligram of fresh weight of seedlings was significantly lower in the Col-0 seedlings treated with 2.5 ml/l (Exp. 1 and 2), 1 ml/l (Exp. 3) or 0.25 ml/l (Exp. 1-3), than in those that were not treated (0 ml/l). The level of resistance of the Col-0 seedlings treated with the composition obtained in Example I depended on the applied concentration of the compound, levels of protection greater than 80-90% being reached for concentrations of 2.5 ml/l and 1 ml/l. Concentrations of 0.25 ml/l of the composition obtained in Example I conferred levels of protection greater than 60% in the Col-0 seedlings (Figures 1-3). The levels of protection observed are similar to those of the mutant *cpr1-5* (included in the experiment as a control of resistance to H. *parasitica NOCO2),* which has a high level of resistance to *Hyaloperonospora parasitica NOCO2* (Glazebrook 2001, above; Figure 3).

For the purpose of determining if the mode of action of the composition obtained in Example I was similar to that of the inducer called BION/BTH, a SAR activator, the mutant *npr1-1* which has the SAR activation pathway blocked and does not respond to the treatment with BION/BTH (Cao et al., 1996, The Arabidopsis NPR1 gene that controls systemic acquired resistance encodes a novel protein containing ankyrin repeats. Cell 88, 57-63; Glazebrook, 2001, above) was included in the analyses. As is observed in Figures 1-3, the number of spores of *Hyaloperonospora parasitica* per milligram of fresh weight of *npr1-1* seedlings was significantly lower in those seedlings which had been treated with 2.5 ml/l (Exp. 1 and 2), 1 ml/l (Exp. 3) or 0.25 ml/l (Exps. 1-3), than in the seedlings that were not treated (0 ml/l). The level of resistance of the *npr1-1* seedlings treated with the composition obtained in Example I depended on the applied concentration, levels of protection greater than 80-90% being reached for concentrations of 2.5 ml/l and 1 ml/l. Concentrations of 0.25 ml/l of the composition conferred levels of protection between 60%-30% approximately in the *npr1-1* seedlings (Figures 1-3). The levels of protection observed are similar to those of the mutant *cpr1-5* which has a high level of resistance to *Hyaloperonospora parasitica NOCO2* (Glazebrook 2001, above; Figure 3).

Based on said results, it can therefore be concluded that the composition obtained in Example I induces resistance in *Arabidopsis thaliana* against *Hyaloperonospora parasitica* at concentrations of 0.25 ml/l, this activity being dependent on the dose used. Likewise, it confers resistance in the mutant *npr1-*1, which does not respond to the inducer BION/BTH and has the SAR activation blocked. Its activity in wild Col-0 and *npr1-1* plants is essentially equivalent, which suggests that the mode of action of the assayed composition differs from that described for BION/BTH.

### Example 2

### Application of the composition obtained in Example I to mitigate the attack of Phytophthora infestans (mildew) on greenhouse tomatoes

### Assay in leaf application

The composition obtained in Example I was applied with average intervals of 14-21 days, at doses of 300 g/hl. The standard product Cupravit 35 WP (copper calcium oxychloride, wettable powder) was likewise applied at doses of 500 g/hl. The number of attacked leaves per plot was measured.

The assay was conducted by UNICOM S.L. (EOR 50/03), in Campohermoso (Almería), in the farm "Las Maravillas", on Tovi variety tomatoes.

In relation to the mitigating efficacy on the attack of the pathogen, a preventive fungistatic action of the assayed composition was observed, slowing down the progression of the disease in the plant. The results obtained are better than those obtained with Cupravit 35 WP.

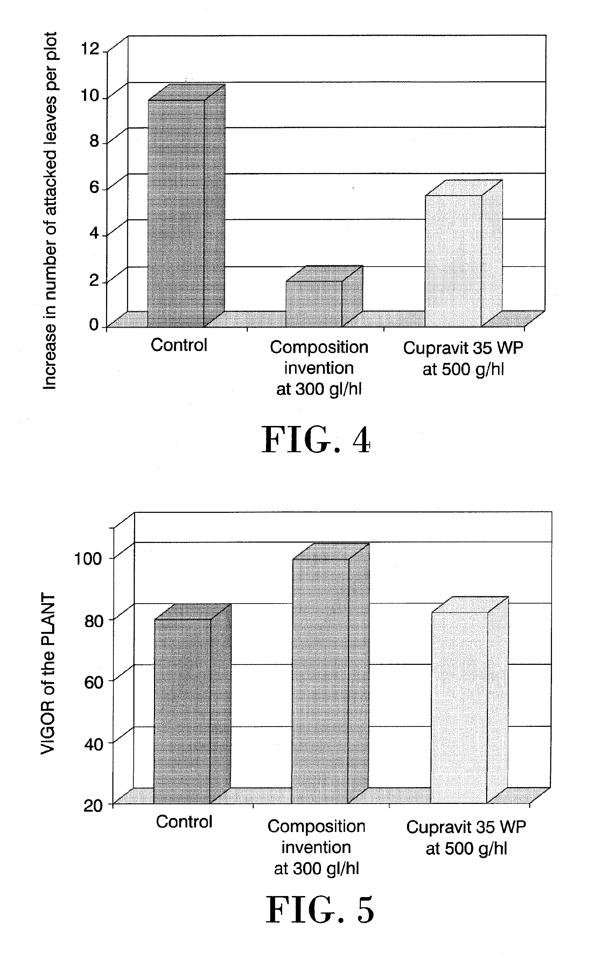

Figure 4 shows the efficacy of the assayed composition for containing or mitigating the progression of the infection of the pathogen *Phytophthora infestans,* delaying the need to intervene with specific or curative fungicides.

Intolerance symptoms were not observed at any time with any of the doses assayed. The tomato crop tolerated all the applications perfectly.

A more natural appearance in the shine and greenness of the leaves was achieved with the assayed composition, behaving as a vigor response inducer (see Figure 5).

### Assay in application through irrigation

The composition obtained in Example I was applied with average intervals of 7-16 days, at doses of 3 l/ha. The standard product Cupravit 35 WP (copper calcium oxychloride, wettable powder) was likewise applied at doses of 4 I/ha. The number of attacked leaves per plot was measured.

The assay was conducted by UNICOM S.L. (EOR 50/03), in Campohermoso (Almería), in the farm "Las Maravillas", on Tovi variety tomatoes (UNO 13-2006 Assay. RCB Device- 4 repetitions).

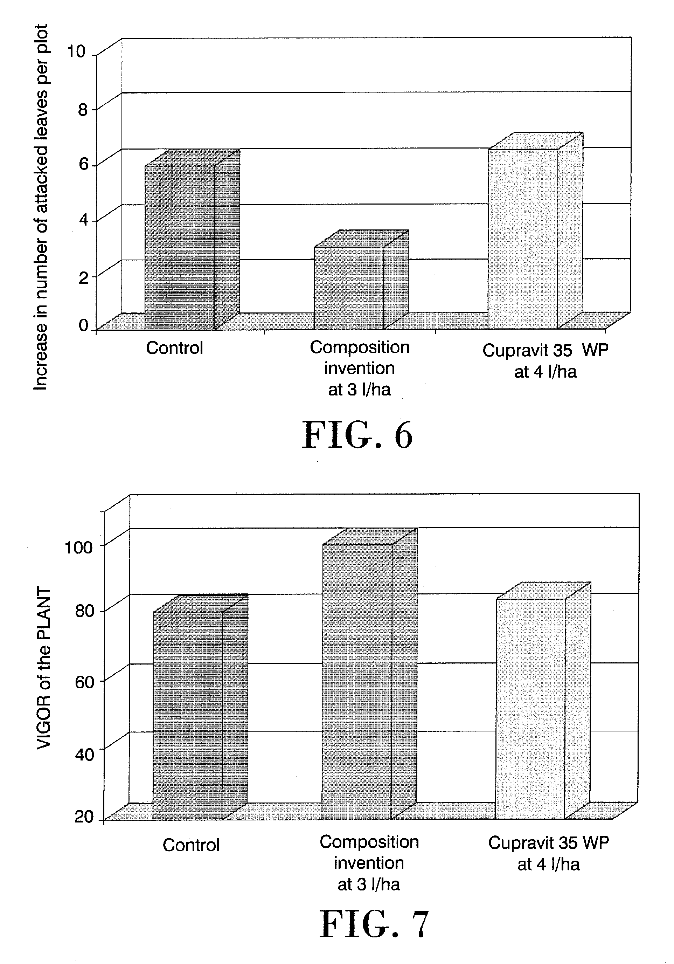

As can be seen in Figure 6, and as in the leaf application assay, continued treatments with the assayed composition applied through irrigation slowed down the progression of the attack of *Phytophthora infestans* on greenhouse tomatoes. The level of attack of the pathogen was considerably lower than in the plots treated with Cupravit 35 WP.

Intolerance symptoms were not observed at any time with any of the doses assayed. The tomato crop tolerated all the applications perfectly.

A more natural appearance in the shine and greenness of the leaves was achieved with the assayed composition, behaving as a vigor response inducer (see Figure 7).

### Example 3

### Application of the composition obtained in Example I for mitigating the attack of Pseudoperonospora cubensis (mildew) on greenhouse cucumbers

### Assay in leaf application

The composition obtained in Example I was applied with average intervals of 14-21 days, at doses of 300 g/hl. The standard product Cupravit 35 WP (copper calcium oxychloride, wettable powder) was likewise applied at doses of 500 g/hl. The percentage of leaf surface attacked was determined.

The assay was conducted by UNICOM S.L. (EOR 50/03), in Carchuna (Granada), in the farm "Las Chuchas", on Brasilia variety Dutch cucumbers (UNO 14-2006 Assay. RCB Device - 4 repetitions).

In relation to the mitigating efficacy on the attack of the pathogen, a preventive fungistatic action of the assayed composition was observed, slowing down the onset of attack of the pathogen. The results obtained are better than those obtained with Cupravit 35 WP.

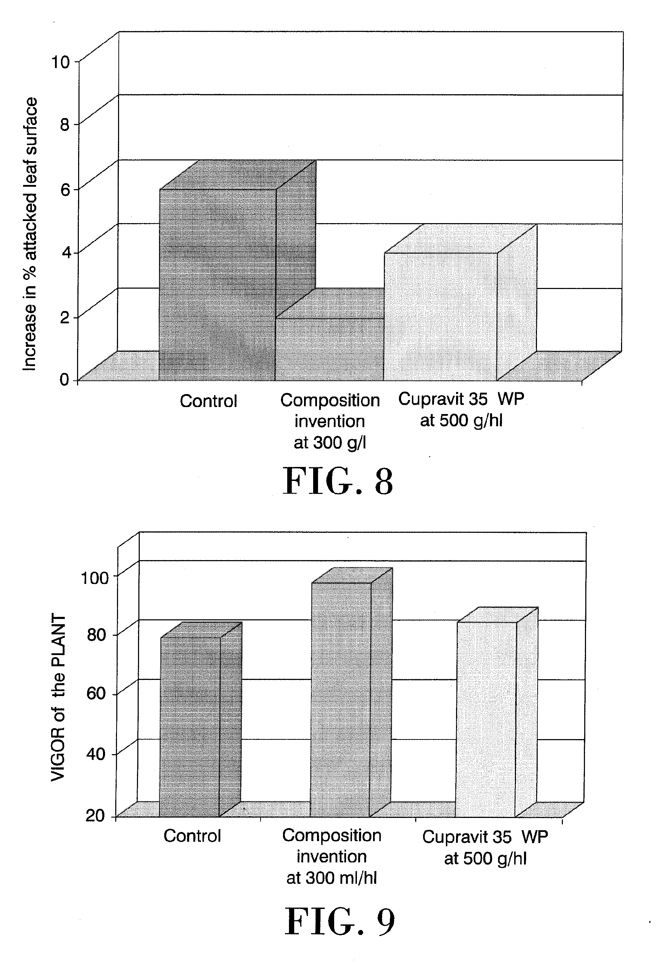

Figure 8 shows the efficacy of the assayed composition with respect to the leaf surface attacked by the pathogen *Pseudoperonospora cubensis* (UNO 15-2006 Assay. RCB Device - 4 repetitions).

Intolerance symptoms were not observed at any time with any of the doses assayed. The cucumber crop tolerated all the applications perfectly.

A more natural appearance in the shine and greenness of the leaves was achieved with the assayed composition, behaving as a vigor response inducer (see Figure 9). The continued application of WP formulations caused a certain "withering" (hardening) in the leaves and left "marks" (remains) thereon which negatively affect the appearance of the plant, a fact which does not occur with the assayed composition of the invention.

### Assay in application through irrigation

The composition obtained in Example I was applied with average intervals of 7-11 days, at doses of 3 I/ha. The standard product Cupravit 35 WP (copper calcium oxychloride, wettable powder) was likewise applied at doses of 4 1/ha. The number of attacked plants per plot was measured.

The assay was conducted by UNICOM S.L. (EOR 50/03), in Carchuna (Granada), in the farm "Las Chuchas", on Brasilia variety Dutch cucumbers. (UNO 16-2006 Assay. RCB Device - 4 repetitions).

The attack started in a very short time period (4-5 days), a fact which is usually quite frequent in this crop. If, furthermore, the conditions are favorable, the days after the strong onset of attack ("explosion"), the infestation spreads quickly throughout the entire greenhouse.

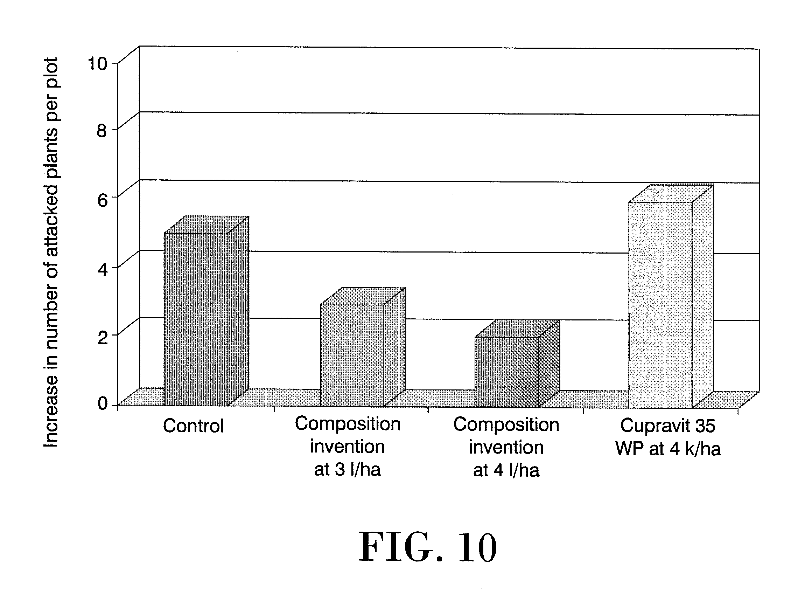

As can be seen in Figure 10, and as in the leaf application assay, continued treatments with the assayed composition applied through irrigation slowed down the onset and the progression of the attack of *Pseudoperonospora cubensis* on greenhouse cucumbers. The level of attack of the pathogen was considerably lower than in the plots treated with Cupravit 35 WP.

All the assayed doses were perfectly tolerated by the crop and phytotoxicity symptoms were not observed at any time.

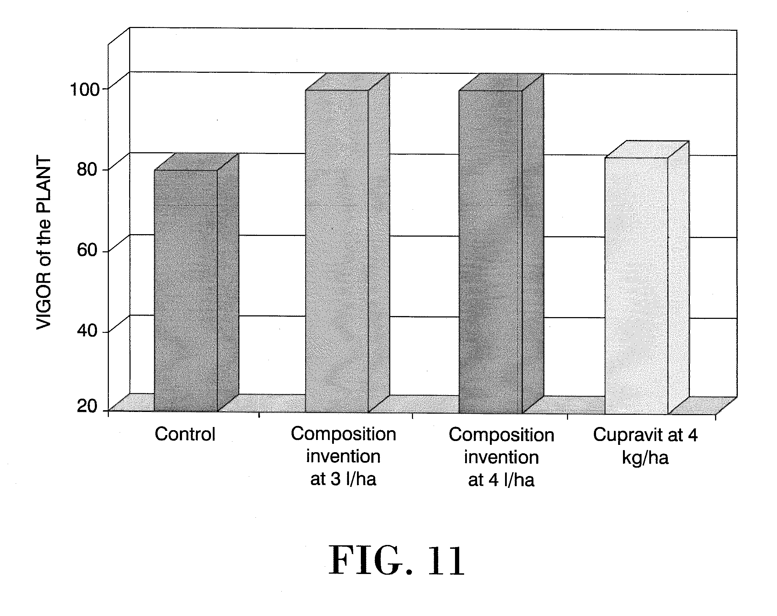

A more natural appearance in the shine and greenness of the leaves was achieved with the assayed composition, behaving as a vigor response inducer (see Figure 11).

### Example 4

### Application of the composition obtained in Example I to mitigate the attack of Bremia lactucae (mildew) on lettuce cultivated outdoors

### Assay in leaf application

The composition obtained in Example I was applied at doses of 2.5 I/hl, 3 I/hl and 4 I/hl. The standard product KDOS (cupric hydroxide) was likewise applied at a dose of 2.5 kg/hl. The percentage of plants with significant attack was determined.

The assay was conducted by SICOP (EOR 50/03), in Zafarraya (Granada), on Isasa variety lettuce, cultivated outdoors (SIFF07003GR019 Assay: RCB Device - 4 repetitions, 12 m² per elementary plot).

In relation to the mitigating efficacy on the attack of the pathogen, it was observed that the continued application of the assayed composition prevented the quick progression of the disease in the plant. The results obtained are better than those obtained with KDOS.

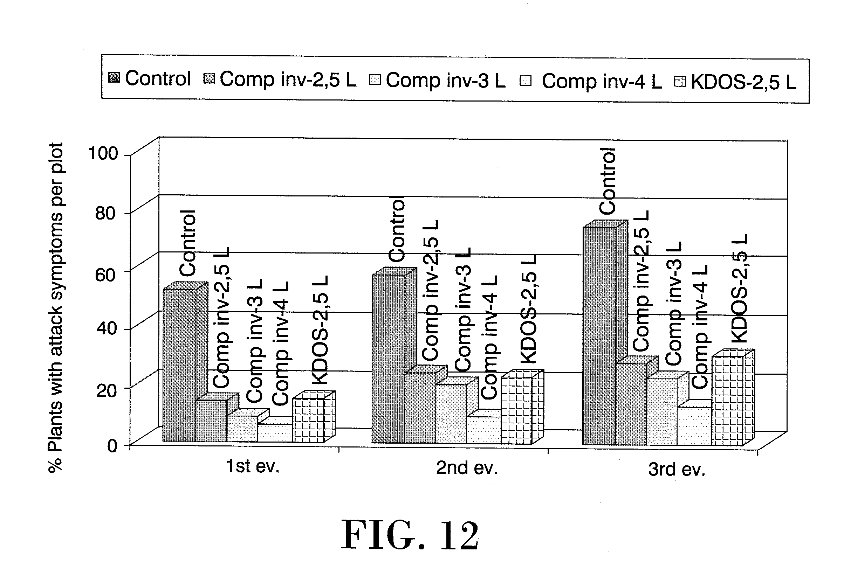

Figure 12 shows the efficacy of the assayed composition for containing or mitigating the progression of the infection of the pathogen *Bremia lactucae.*

The results of the tolerance evaluations did not show any symptom of damage on the crop.

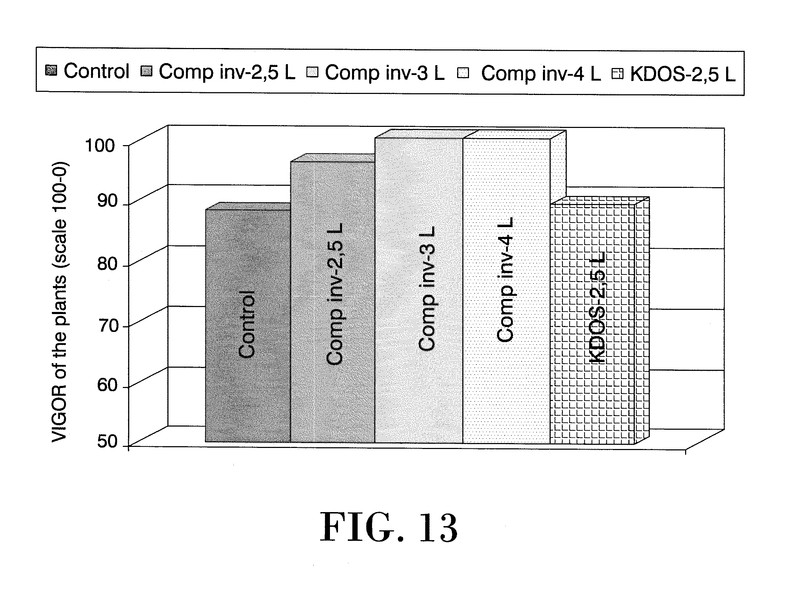

In relation to the vigor, the results obtained clearly show the inducing activity of the assayed composition, which is translated into plants with more shine, greater development and uniformity (see Figure 13).

### Assay in application through irrigation

The composition obtained in Example I was applied at doses of 2.5 l/ha, 3 I/ha and 4 I/ha. The standard product KDOS (cupric hydroxide) was likewise applied at a dose of 2.5 kg/ha. The percentage of plants with significant attack was determined.

The assay was conducted by SICOP (EOR 50/03) in Valencia, on Romaine variety lettuce cultivated outdoors (SIFF07005VA014 Assay: RCB Device - 4 repetitions, 6 m² per elementary plot).

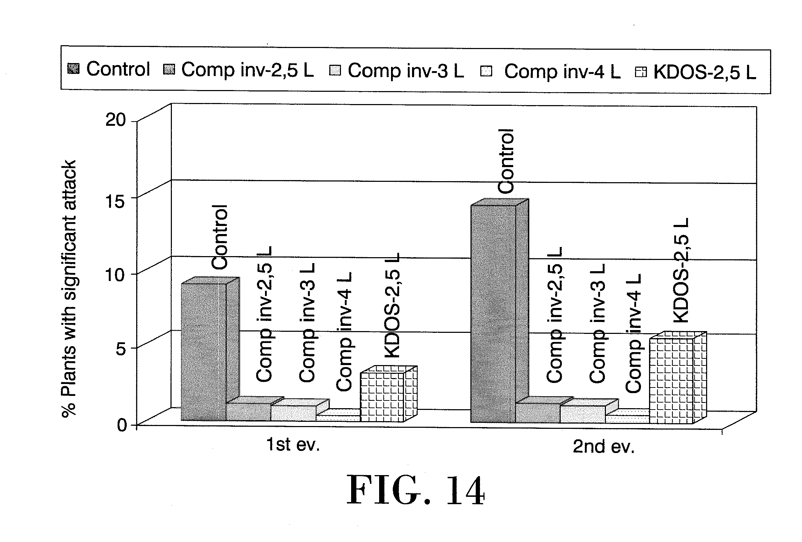

As can be seen in Figure 14, and as in the leaf application assay, the number of plants with significant attack by *Bremia* was considerably lower in the plots treated with the assayed composition, in relation to those treated with the reference standard product.

The results of the tolerance evaluations did not shown any symptom of damage on the crop. Phytotoxicity risks, waiting period problems and problems of the presence of residues in the crop were likewise significantly reduced.

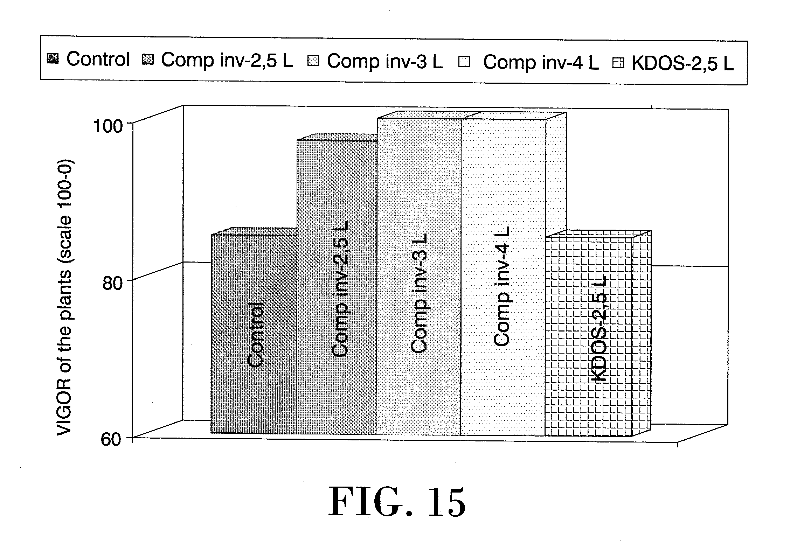

As in the leaf application, the results obtained with the assayed composition applied through irrigation clearly show the inducing activity thereof on the increase in vigor, which translates into plants with more shine, greater development and uniformity (see Figure 15).

### Example 5

### Application of the composition obtained in Example I to mitigate the attack of Phytophthora cactorum (mildew) on strawberries cultivated under a plastic tunnel

### Assay in leaf application

The composition obtained in Example I was applied at doses of 2.5 l/hl and 3 I/hl. The standard product KDOS (cupric hydroxide) was likewise applied at a dose of 2.5 Kg/hl. The percentage of plants with attack symptoms per plot was determined.

The assay was conducted by the company SICOP (EOR 50/03), in Almonte, province of Huelva, in the farm Agrodoñana Integral, on Ventana variety strawberries (SIFF07001 AA002 Assay: RCB Device - 4 repetitions, 4 m² per elementary plot).

In relation to the mitigating efficacy on the attack of the pathogen, it was observed that the continued application of the assayed composition prevented the quick progression of the disease in the plant. The results obtained are better than those obtained with KDOS.

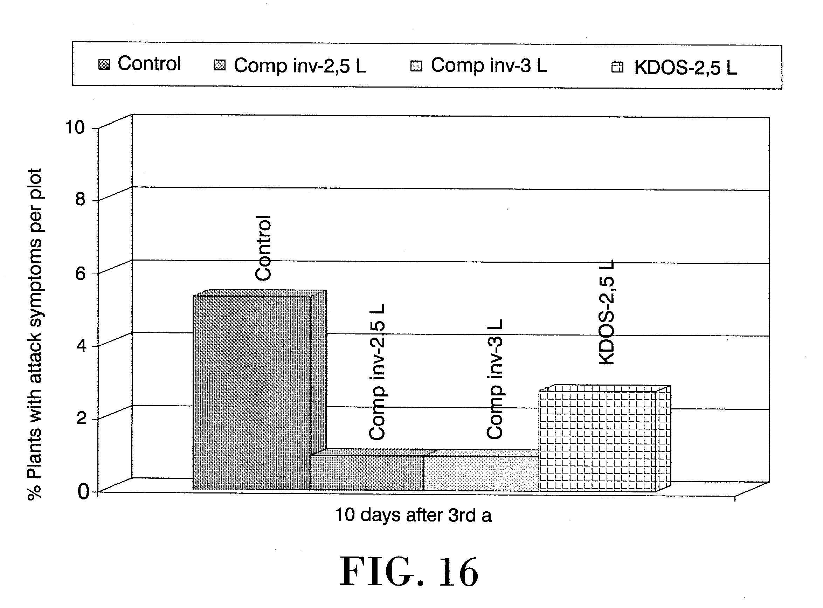

Figure 16 shows the efficacy of the assayed composition for containing or mitigating the progression of the infection of the pathogen *Phytophthora cactorum* (strawberry mildew). It can thus be observed that 10 days after the 3^{rd} application, the plants were maintained at minimum levels of attack in relation to the control, and even in relation to the reference standard product.

The tolerance evaluations confirmed the absence of phytotoxicity risks after repeated applications of the assayed composition, even at the maximum dose.

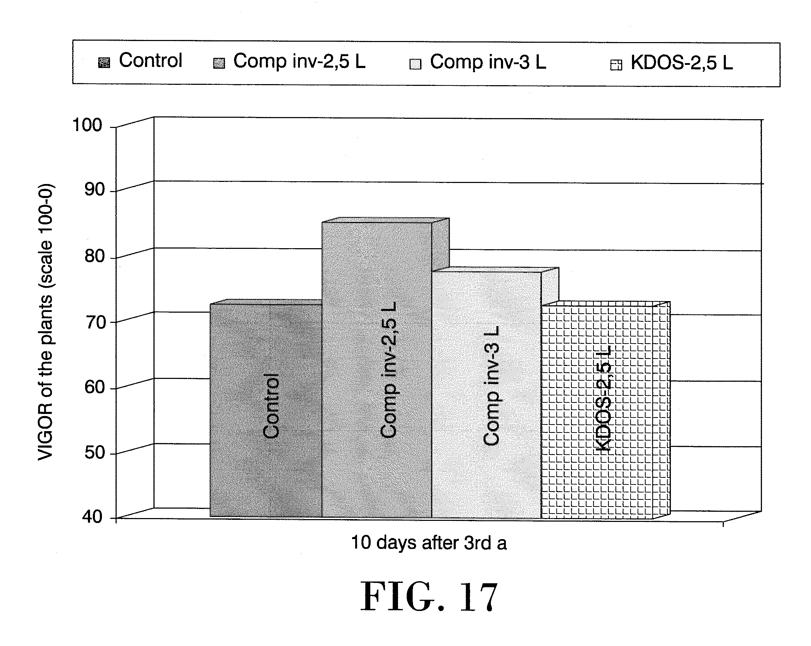

Likewise, the overall efficacy of the assayed composition on the healthiness of the plants, including the vegetative improvement and the vigor thereof, which was considerably better than in the control plots or in those treated with the standard product, has been verified (see Figure 17).

### Assay in application through irrigation

The composition obtained in Example I was applied at doses of 1.5 I/ha, 2.5 I/ha and 3 I/ha. The standard product KDOS (cupric hydroxide) was likewise applied at a dose of 2.5 kg/ha. The percentage of dead plants or plants with attack symptoms per plot was determined.

The assay was conducted by the company SICOP (EOR 50/03), in Almonte, province of Huelva, in the farm Agrodoñana Integral, on Ventana variety strawberries (SIFF00AA003 Assay: RCB Device - 4 repetitions, 6 m² per elementary plot).

In relation to the mitigating efficacy on the attack of the pathogen, it was observed that the continued application of the assayed composition prevented the quick progression of the disease in the plant. The results obtained are better than those obtained with KDOS.

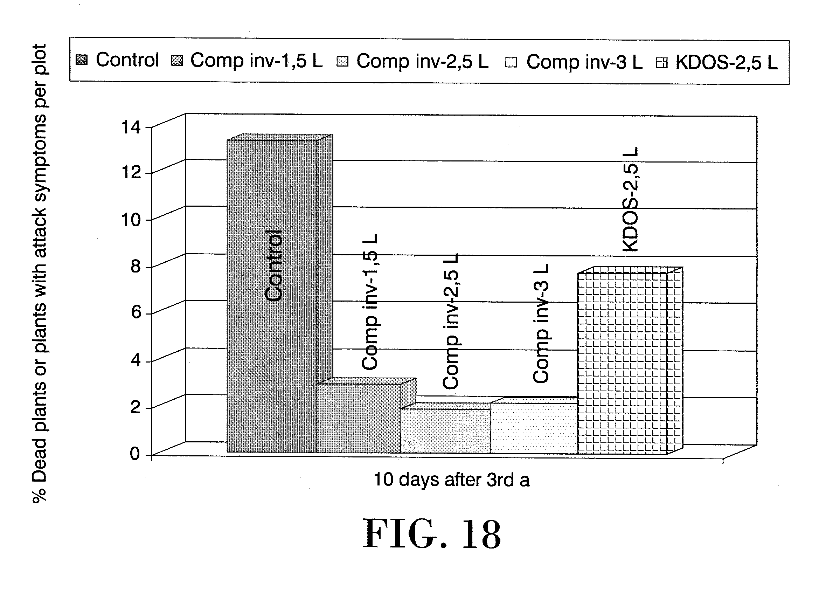

Figure 18 shows the efficacy of the assayed composition for containing or mitigating the progression of the infection of the pathogen *Phytophthora cactorum* (strawberry mildew). It can thus be observed that 10 days after the 3^{rd} application, the plants were maintained at minimum levels of attack in relation to the control, and even in relation to the reference standard product, the efficacy of which was completely insufficient.

The evaluator stressed that a number of plants which were classified as affected in the initial evaluation showed recovery symptoms after the applications of the assayed composition, new leaf growth mainly being observed.

The tolerance evaluations confirmed the absence of phytotoxicity risks after repeated applications of the assayed composition, even at the maximum dose. Waiting period problems and problems of the presence of residues in the crop were likewise significantly reduced.

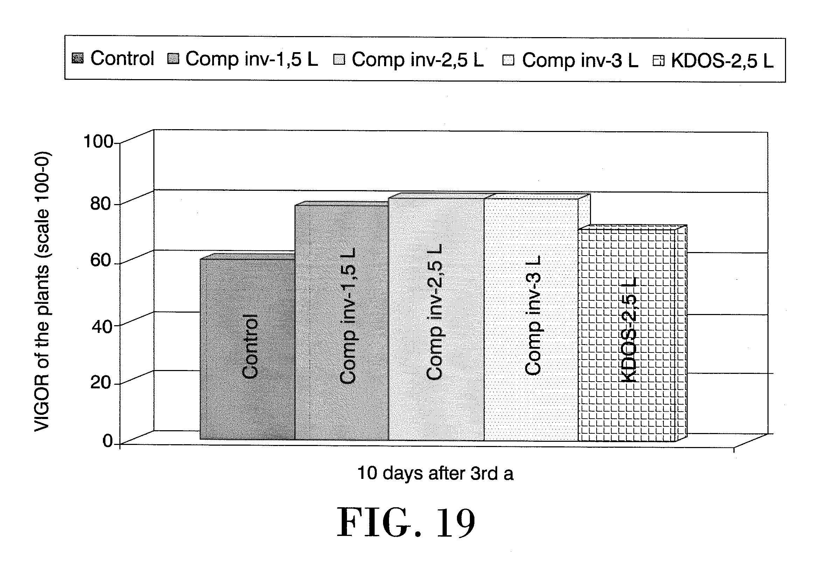

A clear general strengthening of the plants, which show greater vigor and better healthiness, has likewise been verified (see Figure 19).

### Example 6

### Application of the composition obtained in Example I to mitigate the attack of Venturia inaequalis (scab) on apple trees

### Assay in leaf application

The composition obtained in Example I was applied at doses of 250 ml/hl, 300 ml/hl and 500 ml/hl. The standard product KDOS (cupric hydroxide) was likewise applied at a dose of 250 g/hl. The percentage of clean fruit, fruit with less than 3 scab spots, or fruit with more than 3 scab spots, was determined. On the other hand, the percentage of clean fruit per plot was calculated.

The assay was conducted by the company SICOP (EOR 50/03), in Xixona, province of Alicante, in a farm of the Cooperativa Valenciana, on Starking variety apple trees (SIFF07009VA010 Assay: RCB Device - 4 repetitions, 4 trees per elementary plot).

In relation to the mitigating efficacy on the attack of the pathogen, it was observed that the continued application of the assayed composition prevented the quick progression of the disease in the plant. The results obtained are better than those obtained with KDOS.

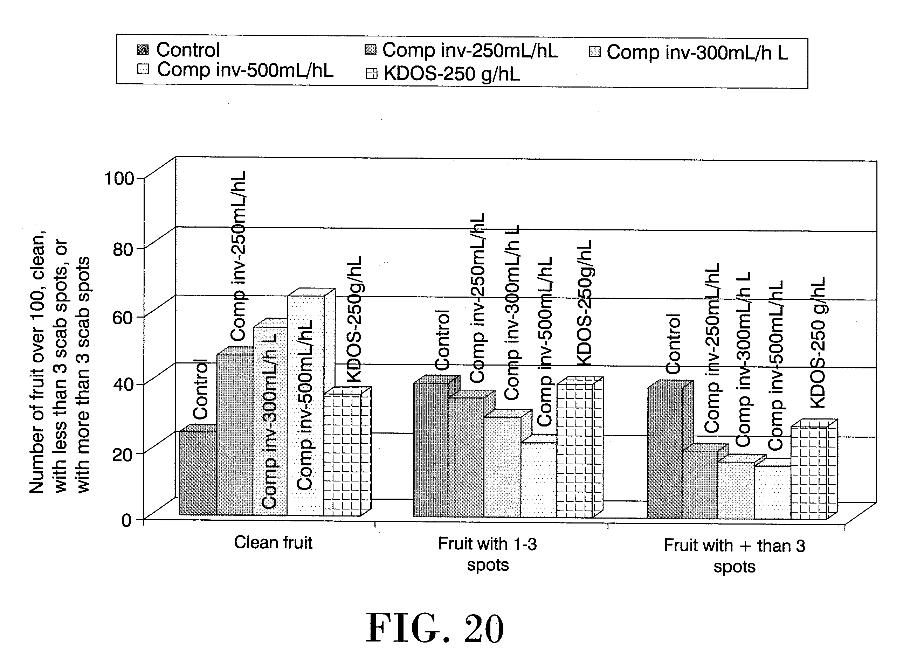

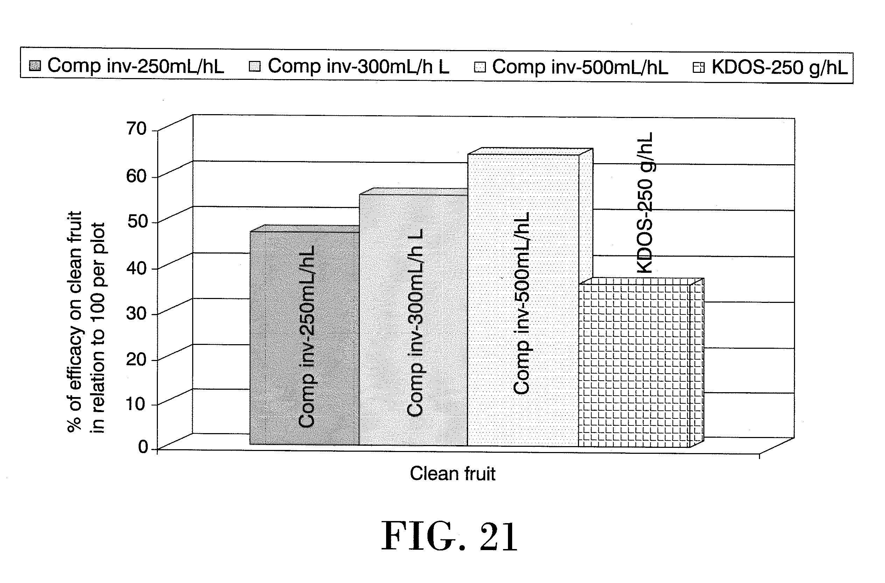

Figures 20 and 21 show the efficacy of the assayed composition for containing or mitigating the progression of the infection of the pathogen *Venturia inaequalis* (apple scab). It can thus be observed that, despite the fact that the attack of the pathogen on the fruit was considerable, the result with any of the doses of the assayed composition was better than that obtained with the standard product in relation to the smaller number of evaluated fruit with more than 3 spots (Figure 20) or in relation to the number of clean fruit (Figure 20 and Figure 21).

The tolerance evaluations confirmed the absence of phytotoxicity risks after repeated applications of the assayed composition, even at the maximum dose.

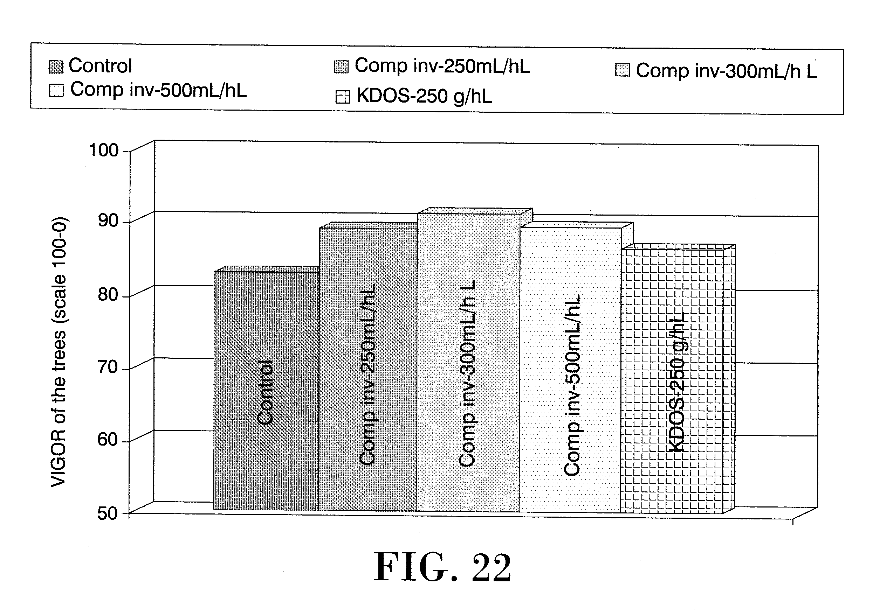

It has likewise been verified that, as has been mentioned in the previous assays on yearly crops, the capacity of the assayed composition to induce vigor improvement responses of the crop is also emphasized on perennial crops (see Figure 22).

### Example 7

### Application of the composition obtained in Example I to mitigate the attack of Venturia pyrina (scab) on pear trees

### Assay in leaf application

The composition obtained in Example I was applied at doses of 250 ml/hl, 300 ml/hl and 500 ml/hl. The standard product KDOS (cupric hydroxide) was likewise applied at a dose of 250 g/hl. The percentage of clean fruit, fruit with 1 scab spot, fruit with 2-3 scab spots, or fruit with more than 3 scab spots was determined. On the other hand, the percentage of clean fruit was calculated.

The assay was conducted by the company SICOP (EOR 50/03), in Fuente Vaqueros, province of Granada, in the farm Haza Pedro Ruiz, property of Mr. Manuel Martín, on Blanquilla variety pear trees with an age of 8 years, with localized irrigation (SIFF07011 GR020 Assay: RCB Device - 4 repetitions, 6 trees per elementary plot).

In relation to the mitigating efficacy on the attack of the pathogen, it was observed that the continued application of the assayed composition prevented the quick progression of the disease in the plant. The results obtained are better than those obtained with KDOS.

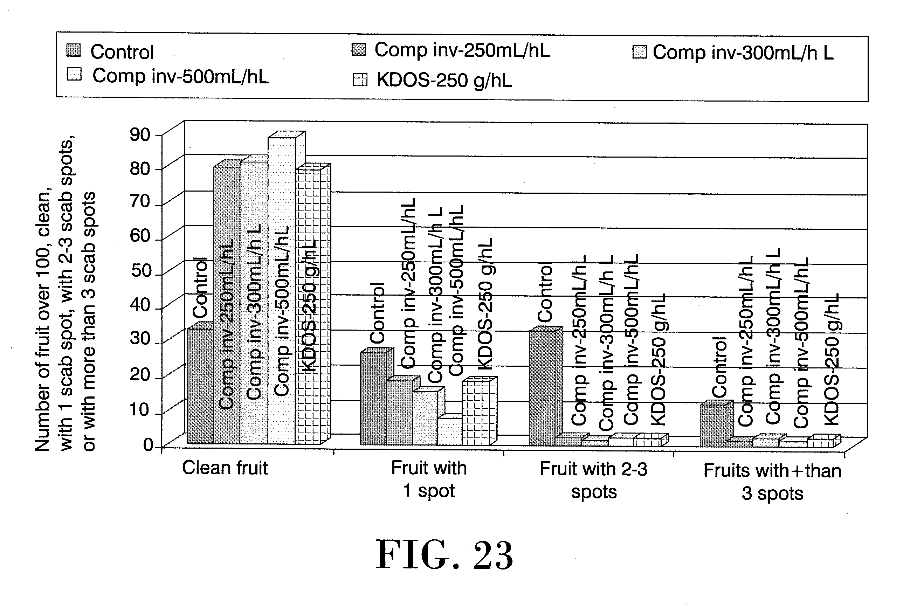

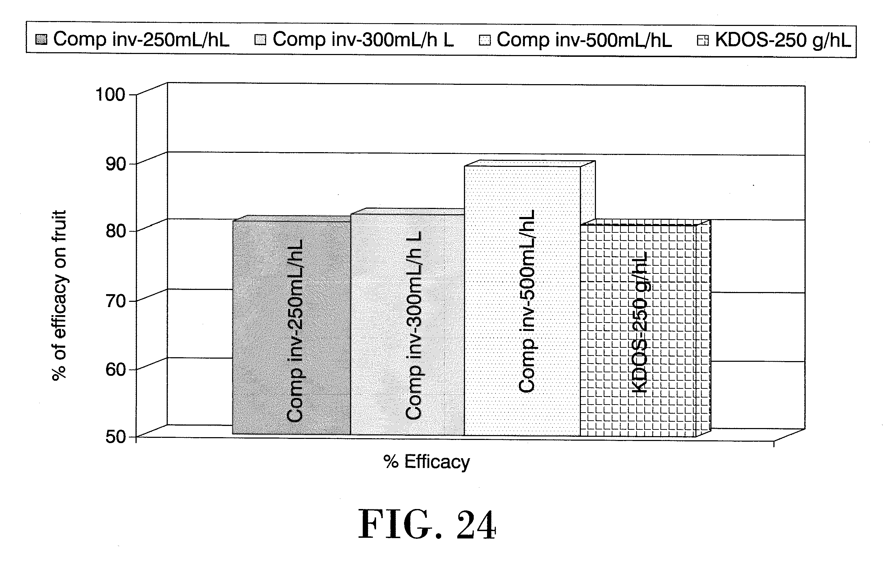

Figures 23 and 24 show the efficacy of the assayed composition for containing or mitigating the progression of the infection of the pathogen *Venturia pyrina* (pear scab). It can thus be observed that, despite the fact that the attack of the pathogen on the fruit was considerable, the result with any of the doses of the assayed composition was better than that obtained with the standard product in relation to the smaller number of evaluated fruit with more than 3 spots (Figure 23) or in relation to the number of clean fruit (Figure 23 and Figure 24).

The tolerance was total at any of the assayed doses, no phytotoxicity symptom being observed.

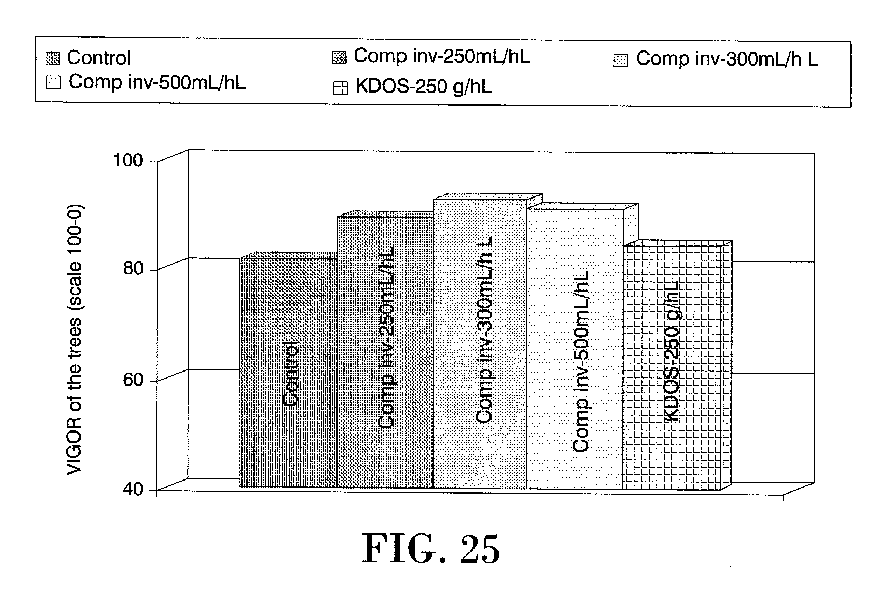

It has likewise been verified that, as in the case of the assay on apple trees, the vigor increase response was evident in relation to the control and to the standard product (see Figure 25).

### Example 8

### Application of the composition obtained in Example I to mitigate the attack of Monilinia spp (mummification) on peach trees

### Assay in leaf application

The composition obtained in Example I was applied at doses of 250 ml/hl, 300 ml/hl and 500 ml/hl. The standard product KDOS (cupric hydroxide) was likewise applied at a dose of 250 g/hl. The percentage of clean fruit, fruit with 1 scab spot, fruit with 2-3 scab spots, or fruit with more than 3 scab spots was determined. On the other hand, the percentage of fruit attacked per plot was calculated.

The assay was conducted by the company SICOP (EOR 50/03), in Turís, province of Valencia, on the Ambra variety (SIFF07006VA016 Assay: RCB Device - 4 repetitions, 4 trees per elementary plot).

In relation to the mitigating efficacy on the attack of the pathogen, it was observed that the continued application of the assayed composition prevented the quick progression of the disease in the plant. The results obtained are better than those obtained with KDOS.

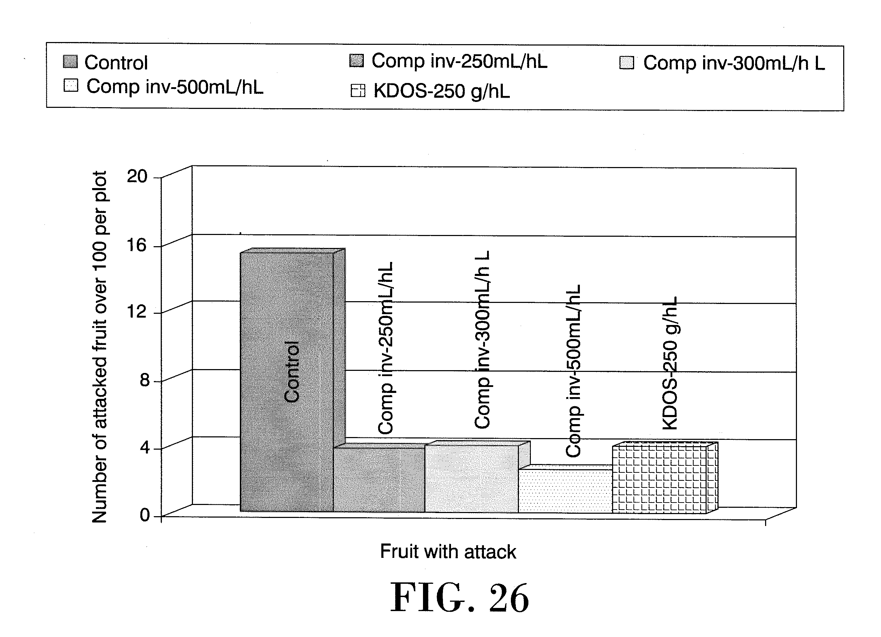

Figure 26 shows the efficacy of the assayed composition for containing or mitigating the progression of the infection of the pathogen *Monilinia spp* (peach tree mummification). It can thus be observed that the results for the maximum dose of the assayed composition, 500 ml/hl, were better than those obtained with the standard product. The doses of 250 and 300 ml/hl of the assayed composition provided efficacies similar to those obtained with the standard product.

The assayed composition did not show any intolerance risk or residue problems.

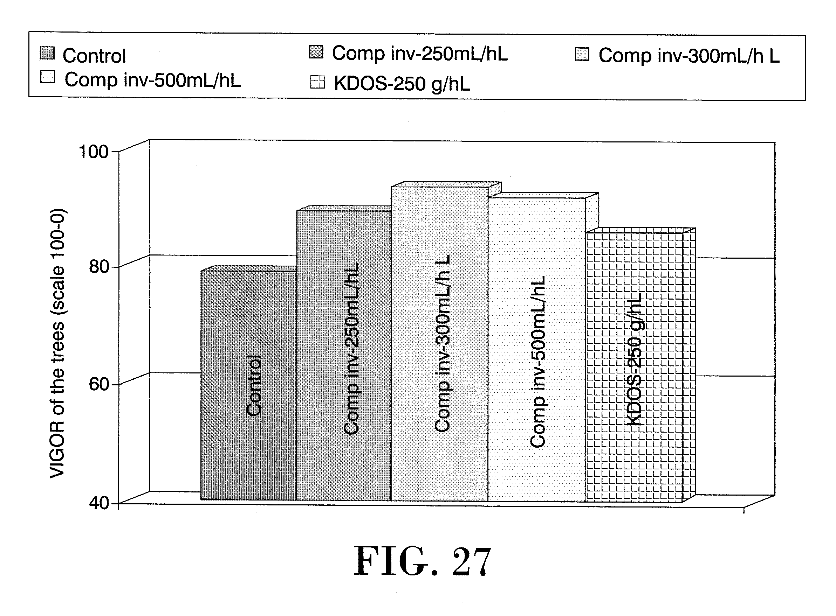

It has likewise been verified that the treatments with the assayed composition translate into a clear general strengthening in the plant, showing greater vigor and better healthiness (see Figure 27).

### Example 9

### Application of the composition obtained in Example I to mitigate the attack of Plasmopara viticola (mildew) on vines

### Assay in leaf application

The composition obtained in Example I was applied at doses of 250 ml/hl, 300 ml/hl and 500 ml/hl. The standard product KDOS (cupric hydroxide) was likewise applied at a dose of 250 g/hl. Two evaluations were carried out with a 1-week interval, and the percentage of clean leaves and the percentage of leaves with 5-30%, with 40-60% and with more than 70% of attacked leaf surface were determined for each of them.

The assay was conducted by the company SICOP (EOR 50/03), in Bollullos del Condado, province of Huelva, in the farm "La Parrilla", on the Zalema variety, with an age of 47 years (SIFF07012GR044 Assay: RCB Device - 4 repetitions, 49 m² per elementary plot).

In relation to the mitigating efficacy on the attack of the pathogen, it was observed that the continued application of the assayed composition prevented the quick progression of the disease in the plant. The results obtained are better than those obtained with KDOS.

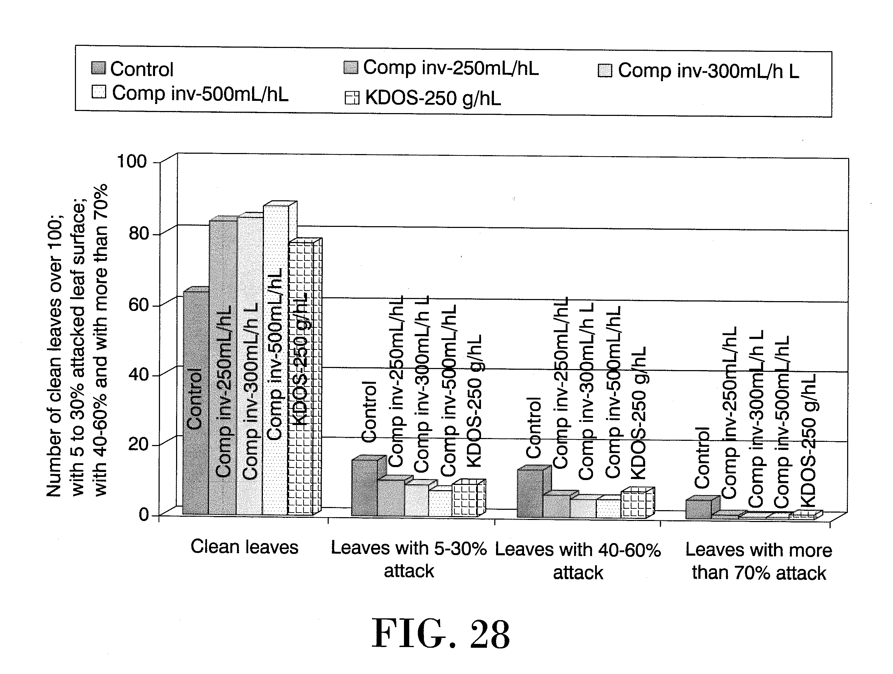

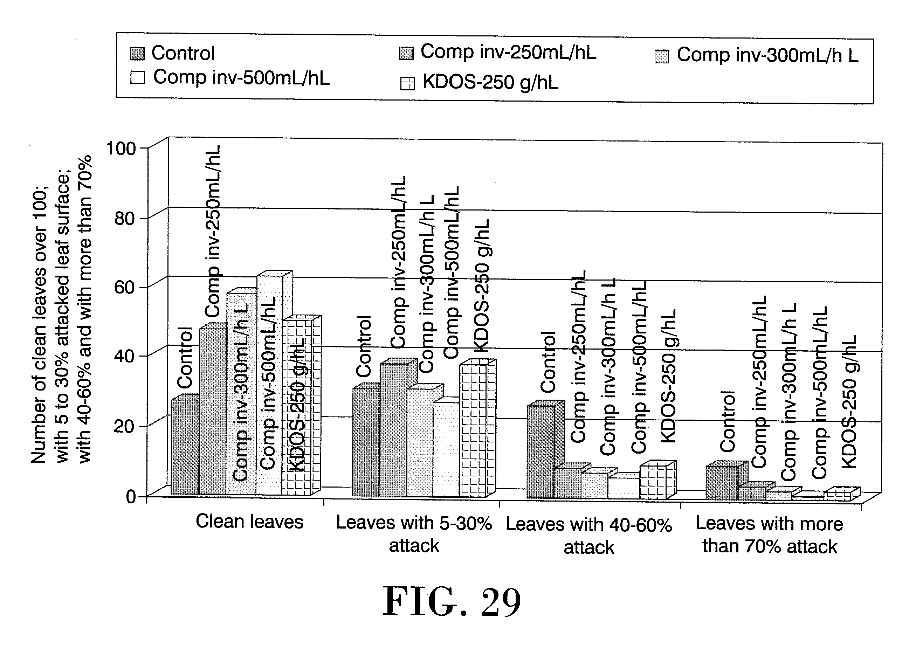

Figures 28 and 29 show the efficacy of the assayed composition for containing or mitigating the progression of the infection of the pathogen *Plasmopara viticola* (vine mildew). It can thus be observed that the results for any of the doses of the assayed composition were better than those obtained with the standard product in relation to the number of clean leaves, or in relation to the smaller number of evaluated leaves with up to 80% of attacked leaf surface.

It is emphasized that the level of attack of mildew (*Plasmopara viticola*) was considerable during the assay, which allowed analyzing the provided data more objectively. The time of starting the applications was optimal, considering the preventive nature of the applications.

The favorable conditions for developing the disease allowed evaluating the first detected mildew foci in leaves, which attack increased considerably in the subsequent evaluation.

The tolerance of the crop was total, no phytotoxicity symptom or risk due to the presence of residues being evaluated.

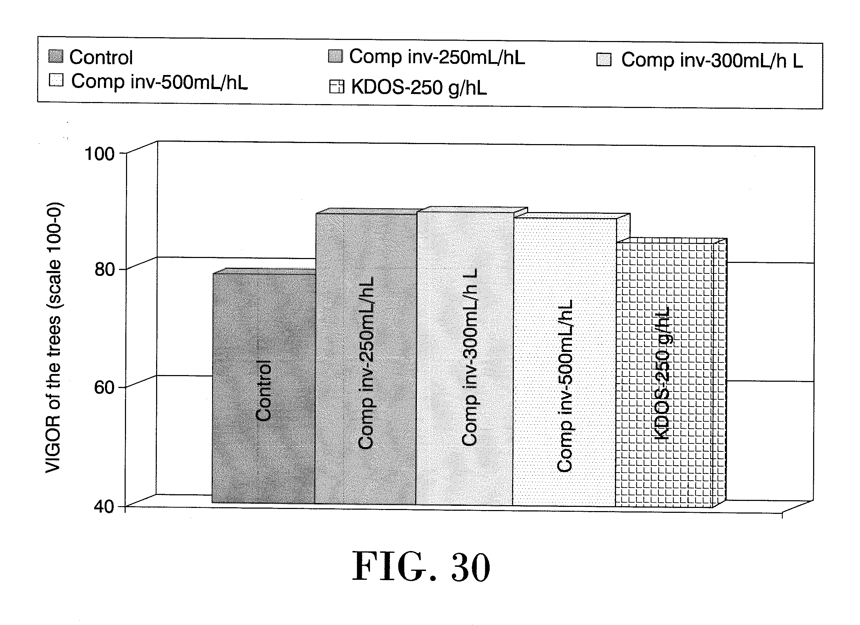

It has likewise been verified that the treatments with the assayed composition translate into a clear general strengthening in the plant, showing greater vigor and better healthiness (see Figure 30).

### Example 10

### Application of the composition obtained in Example I to mitigate the attack of Spilocaea oleagina (leaf spot) on olive trees

### 10.1 Assay no. 1

### Assay in leaf application

The composition obtained in Example I was applied at doses of 400 ml/hl. Likewise, the standard product SC (calcium copper sulfate) at 20% was likewise applied at a dose of 800 g/hl. The attack intensity and frequency, as well as the latent leaf spot, were determined.

The assay was conducted by the company PROMO-VERT (EOR 19/97), in Aznalcollar, province of Seville, in the farm "EI Prado", on the Picual variety (06 F OL SA 01 Assay: Device - 4 repetitions, 4 trees per elementary plot).

In relation to the mitigating efficacy on the attack of the pathogen, it was observed that the continued application of the assayed composition prevented the quick progression of the disease in the plant. The results obtained are better than those obtained with the standard product SC.

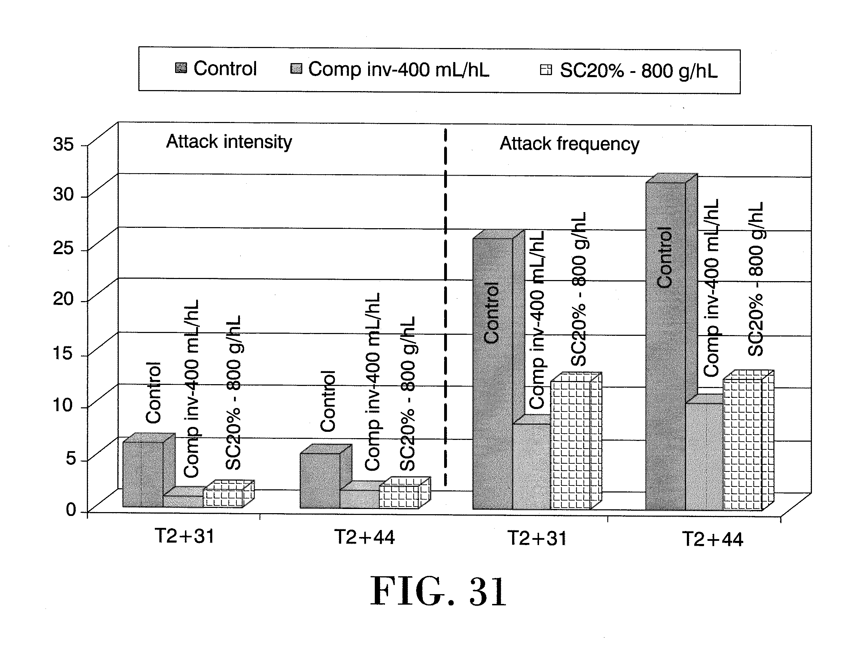

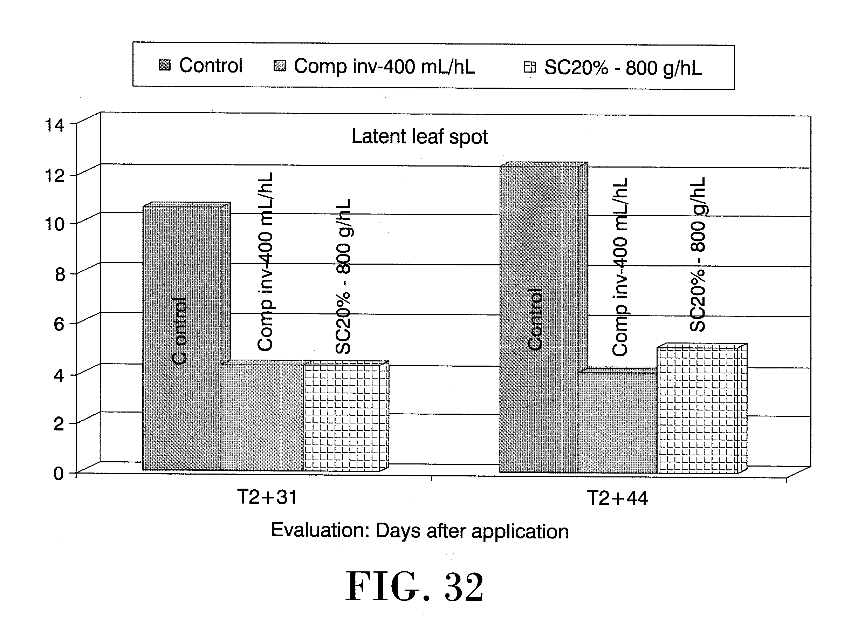

Figures 31 and 32 show the efficacy of the assayed composition for containing or mitigating the progression of the infection of the pathogen *Spilocaea oleagina* (olive leaf spot). It can thus be observed that the results for a dose of 400 ml/hl of the assayed composition are similar to those obtained with the standard product. The activity with respect to the attack frequency is between 60 and 70% for both products (Figure 31).

In relation to the percentage of attack in shoots (attack intensity), it has been sufficient to evaluate this assay, in this case the dose of the assayed composition of 400 ml/hl exceeds the standard product with a value of 75% of activity, which in this case was for mitigating the damage of the pathogen (Figure 31).

The evaluation of latent leaf spot shows an increase in the controls from the initial 5.5% to 12.5% of affected leaves, whereas in the case of the assayed composition at 400 ml/hl and the standard product, it was 4% and 5% of affected leaves, respectively, at the end of the assay (Figure 32).

An evaluation of the defoliation caused by *Spilocaea* was also carried out by means of weighing the leaves upon collecting the olives. A mean of 34 g was observed in the controls, whereas for the assayed composition at 400 ml/hl and the standard product the defoliation was negligible with 3 g in each case.

The tolerance of the crop was total, no phytotoxicity symptomatology being observed.

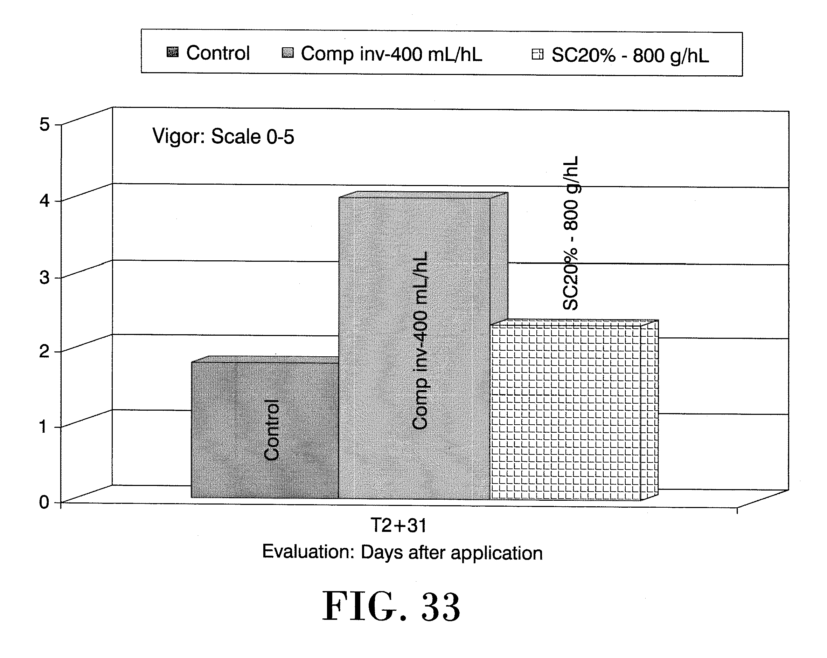

It has likewise been verified that the treatments with the assayed composition translate into a clear general strengthening in the plant, showing greater vigor and better healthiness (see Figure 33).

### 10.2 Assay no. 2

### Assay in leaf application

The composition obtained in Example I was applied at doses of 400 ml/hl. The standard product SC (calcium copper sulfate) at 20% was likewise applied at a dose of 800 g/hl. The attack intensity and frequency, as well as the latent leaf spot, were determined.

The assay was conducted by the company PROMOVERT (EOR 19/97), in Puebla del Rio, province of Seville, in the farm "EI Aceitunillo", on the Manzanillo variety (06 F OL SA 02 Assay: Device - 4 repetitions, 3 or 4 trees per elementary plot).

In relation to the mitigating efficacy on the attack of the pathogen, it was observed that the continued application of the assayed composition prevented the quick progression of the disease in the plant. The results obtained are better than those obtained with the standard product SC.

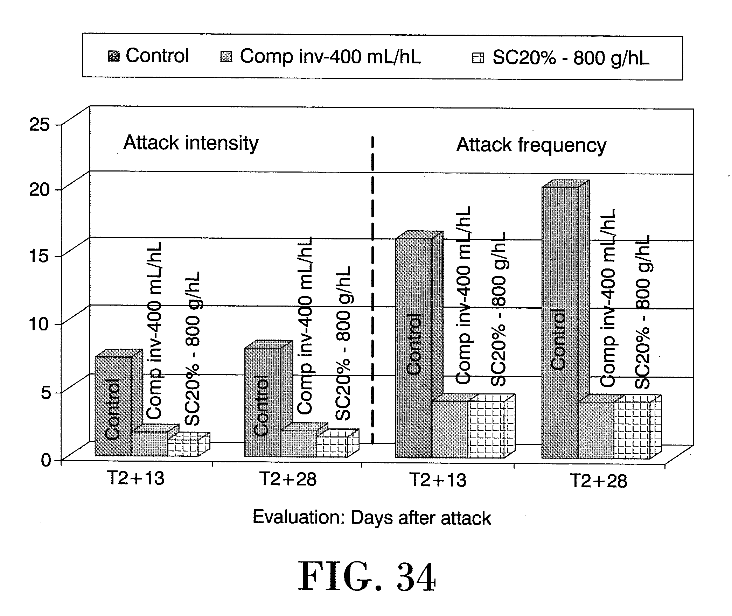

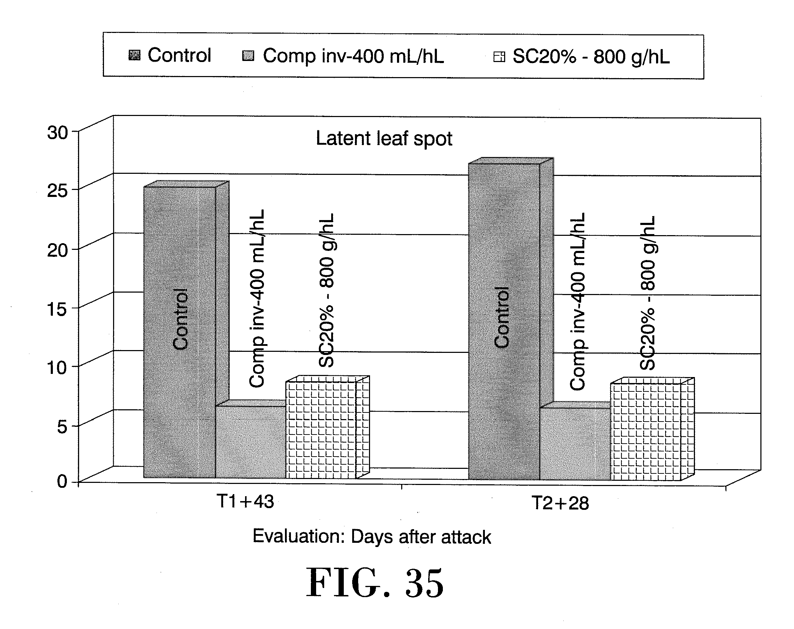

Figures 34 and 35 show the efficacy of the assayed composition for containing or mitigating the progression of the infection of the pathogen *Spilocaea oleagina* (olive leaf spot). It can thus be observed that the results for a dose of 400 ml/hl of the assayed composition are similar to those obtained with the standard product, with a good activity which reaches up to 80% for both.

In relation to the attack intensity, it increases from the initial 0.7% to 8.8% in the controls. In the case of the assayed composition at 400 ml/hl, activity values reaching 86% are obtained (Figure 34).

The evaluation of latent leaf spot reproduces an increase in the controls from the initial 3.8% to 27% in the control plots. It is significantly lower for the assayed composition at 400 ml/hl and for the standard product with values of 7% and 8%, respectively, at the end of the assay (Figure 35).

The tolerance of the crop was total, no phytotoxicity symptomatology on the crop being observed.

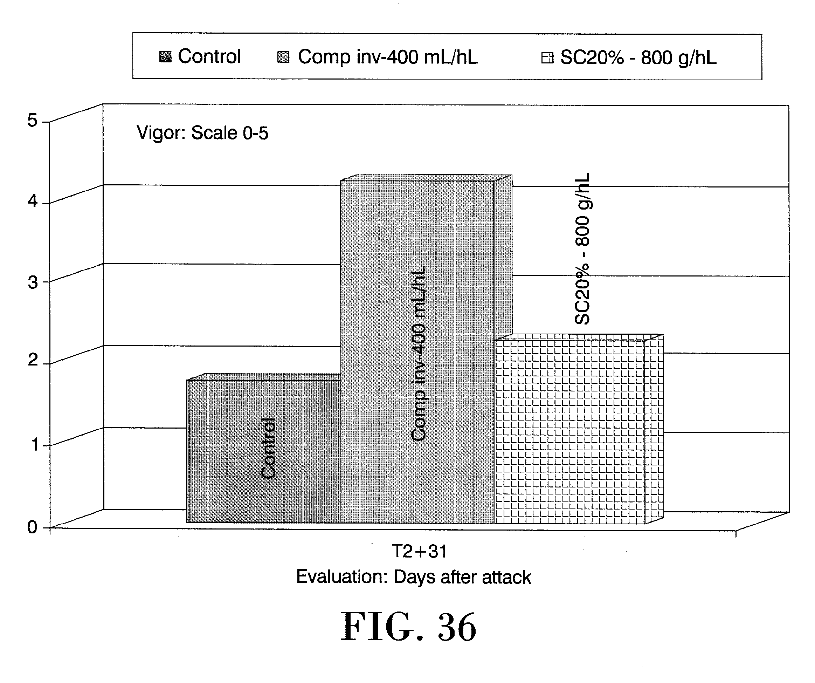

It has likewise been verified that the treatments with the assayed composition translate into a clear general strengthening in the plant, showing greater vigor and better healthiness (see Figure 36).

## Claims

1. Composition for agricultural use, **characterized in that** it comprises an active ingredient consisting of a mixture of copper monogluconate and copper monogalacturonate.

2. Composition according to claim 1, **characterized in that** it comprises 15-30% by weight of active ingredient.

3. Composition according to claim 2, **characterized in that** it comprises 23% by weight of active ingredient.

4. Composition according to claim 1, **characterized in that** it comprises one or more additives selected from among a surfactant and a pH regulator.

5. Composition according to claim 4, **characterized in that** the surfactant is a C₈-C₁₈ ethoxylated alcohol and the pH regulator is a low molecular weight carboxylic acid.

6. Process for preparing the composition for agricultural use of claims 1 - 5, **characterized in that** it comprises the steps of:
(a) dissolving in water 30-50% by weight, with respect to the total final composition weight, of pectin at a temperature of 55-65 ºC and adding 4-6% by weight, with respect to the total final composition weight, of at least one pectinase enzyme;
(b) passing a carbon dioxide stream through the solution obtained in step (a) and adding 0.3-0.6% by weight, with respect to the total final composition weight, of at least one reductase enzyme; and
(c) adding a soluble copper salt to the solution obtained in step (b).

7. Process according to claim 6, **characterized in that** in step (a) 40% by weight, with respect to the total final composition weight, of pectin is dissolved at a temperature of 60ºC and 5% by weight, with respect to the total final composition weight, of at least one pectinase enzyme is added.

8. Process according to claim 6, **characterized in that** in step (b) 0.5% by weight, with respect to the total final composition weight, of at least one reductase enzyme is added.

9. Method for preventing or reducing the damage of diseases in cultivable plants, **characterized in that** it comprises applying the composition for agricultural use of claims 1-5 thereto by means of fertirrigation or leaf spraying.

10. Method for inducing and stimulating the self-defenses of cultivable plants, **characterized in that** it comprises applying the composition for agricultural use of claims 1-5 thereto by means of fertirrigation or leaf spraying.

11. Method for increasing the vigor and the healthiness of cultivable plants, **characterized in that** it comprises applying the composition for agricultural use of claims 1-5 thereto by means of fertirrigation or leaf spraying.
